# EUROPEAN PATENT APPLICATION

(11) **EP 3 978 744 A1**
(43) Date of publication of application: **06.04.2022**
(21) Application number: 20814120.0
(22) Date of filing: 28.05.2020
(51) Int. Cl.: F02M 26/04, F02M 26/52, F02B 37/12

(54) **EXHAUST GAS RECIRCULATION SYSTEM AND SHIP COMPRISING SAME**

(30) Priority: 29.05.2019 KR 20190063441
(71) Applicant: Hyundai Heavy Industries Co., Ltd., Ulsan 44032 (KR)
(72) Inventor: BAEK, Eun Sung, Ulsan 44032 (KR); HAN, Ju Seog, Ulsan 44032 (KR); LEE, Yong Seok, Ulsan 44032 (KR); KIM, Hyung Kwan, Ulsan 44032 (KR)
(74) Representative: Betten & Resch
(86) International application number: PCT/KR2020/006941
(87) International publication number: WO 2020/242230

(57) **Abstract**

There are provided an exhaust gas recirculation (EGR) system applied when a dual fuel engine is operated in a gas mode. The EGR system includes: a cylinder in which fuel is burned; an exhaust valve provided at an upper side of the cylinder; a piston reciprocating between a bottom dead point and a top dead point in the cylinder; a gas fuel supply unit supplying gas fuel to the cylinder in the middle while the piston moves from the bottom dead point to the top dead point; an intake line through which scavenging gas introduced to the cylinder passes; an exhaust line through which exhaust gas discharged from the cylinder passes; a turbo charger including a compressor and a turbine, wherein the compressor is connected to the intake line to compress the scavenging gas and then supply the compressed scavenging gas to the cylinder, and wherein the turbine is connected to the exhaust line to be driven by being supplied with the exhaust gas from the cylinder, and transfers rotary power to the compressor; an EGR line connecting a front end portion of the turbine on the exhaust line to a front end portion of the compressor on the intake line; and a first controller controlling opening/closing of the exhaust valve and/or a second controller controlling a flow rate of the exhaust gas supplied to the turbine.

## Description

### TECHNICAL FIELD

The present invention relates to an exhaust gas recirculation system and a ship including the same.

### BACKGROUND ART

In general, various engines including a diesel engine, a gas engine, a dual fuel engine, and the like have been developed as large-sized engines loaded into ships and the like. Among these engines, the dual fuel engine is frequently used for ships owing to an advantage in which the dual fuel engine can simultaneously use two kinds of fuels, e.g., gas (LNG, etc.) and diesel.

The dual fuel engine installed in a ship may be classified into a high pressure engine (MEGI) and a low pressure engine (X-DF, etc.) according to an internal pressure of a combustion chamber, and be classified as a two-stroke engine (ME-GI, X-DF), a four-stroke engine (DFDE), or the like.

The dual fuel engine is operated in one of a gas mode in which a propelling driving force is generated by using gas as a main fuel and a diesel mode in which a propelling driving force is generated by using diesel as a main fuel.

To this end, the dual fuel engine (particularly, a two-stroke low-pressure Otto-cycle engine) includes a cylinder having a combustion chamber, a piston performing a reciprocating motion, a cylinder cover installed at an upper side of the cylinder, a diesel injector installed at the cylinder cover to spray diesel fuel into the cylinder, an exhaust valve installed at the cylinder cover to discharge exhaust gas burned in the cylinder, an exhaust gas receiver supplied with the exhaust gas discharged from the cylinder, a scavenging receiver installed at a lower side of the cylinder to supply air to the inside of the cylinder, a fuel supply (gas injector or gas nozzle) installed between the upper side and the lower side of the cylinder to supply gas fuel to the inside of the cylinder, and a diesel injector or a separated pilot injector, which injects a small amount of diesel fuel as pilot fuel for the purpose of ignition in the gas mode.

Also, the dual fuel engine incudes a turbo charger which increases power of the engine by increasing an amount of air supplied to the cylinder, using exhaust gas discharged from the cylinder. Compressed air supplied from the turbo charger may be supplied to the scavenging receive to be supplied to the cylinder.

When the dual fuel engine is operated in the diesel mode, combustion of air and fuel occurs, and hence a large amount of nitrous oxide (NOx) as a harmful substance is discharged. Therefore, it is necessary to remove the harmful substance according to regulation of an environmental problem.

An Exhaust Gas Recirculation (EGR) system supplies a portion of exhaust gas having a thermal capacity greater than that of air to scavenging gas of the engine, to lower the temperature (combustion temperature, compression temperature of a mixture, etc.) in the combustion chamber and to suppress generation of the nitrous through oxygen concentration reduction.

However, when the dual fuel engine is operated in the gas mode, combustion efficiency is decreased due to a decrease in an air inflow rate. In addition, an application effect of the EGR system may not be efficiently acquired, or an operation of the engine may be restricted. Therefore, there is required a method for efficiently acquiring an effect of the EGR system even when the dual fuel engine is operated in the gas mode.

### DISCLOSURE

### TECHNICAL PROBLEM

The present invention is conceived to solve the aforementioned problems. Accordingly, an object of the present invention is to provide an exhaust gas recirculation (EGR) system applied when a dual fuel engine is operated in a gas mode.

### TECHNICAL SOLUTION

In accordance with an aspect of the present invention, there is provided an exhaust gas recirculation (EGR) system including: a cylinder in which fuel is burned; an exhaust valve provided at an upper side of the cylinder; a piston reciprocating between a bottom dead point and a top dead point in the cylinder; a gas fuel supply unit supplying gas fuel to the cylinder in the middle while the piston moves from the bottom dead point to the top dead point; an intake line through which scavenging gas introduced to the cylinder passes; an exhaust line through which exhaust gas discharged from the cylinder passes; a turbo charger including a compressor and a turbine, wherein the compressor is connected to the intake line to compress the scavenging gas and then supply the compressed scavenging gas to the cylinder, and wherein the turbine is connected to the exhaust line to be driven by being supplied with the exhaust gas from the cylinder, and transfers rotary power to the compressor; an EGR line connecting a front end portion of the turbine on the exhaust line to a front end portion of the compressor on the intake line; and a first controller controlling opening/closing of the exhaust valve, wherein the first controller controls a closing timing of the exhaust valve in exhaust recirculation through the EGR line.

Specifically, the first controller may advance the closing timing of the exhaust valve in the exhaust recirculation through the EGR line.

Specifically, the first controller may control an effective compression ratio of the cylinder in the exhaust recirculation through the EGR line.

Specifically, the first controller may maintain or increase the effective compression ratio of the cylinder in the exhaust recirculation through the EGR line.

Specifically, the first controller may control a compression temperature in the cylinder in the exhaust recirculation through the EGR line.

Specifically, the first controller may increase the compression temperature in the cylinder in the exhaust recirculation through the EGR line.

Specifically, the first controller may control an injection timing of liquid fuel.

In accordance with another aspect of the present invention, there is provided an exhaust gas recirculation (EGR) system including: a cylinder in which fuel is burned; an exhaust valve provided at an upper side of the cylinder; a piston reciprocating between a bottom dead point and a top dead point in the cylinder; a gas fuel supply unit supplying gas fuel to the cylinder in the middle while the piston moves from the bottom dead point to the top dead point; an intake line through which scavenging gas introduced to the cylinder passes; an exhaust line through which exhaust gas discharged from the cylinder passes; a turbo charger including a compressor and a turbine, wherein the compressor is connected to the intake line to compress the scavenging gas and then supply the compressed scavenging gas to the cylinder, and wherein the turbine is connected to the exhaust line to be driven by being supplied with the exhaust gas from the cylinder, and transfers rotary power to the compressor; an EGR line connecting a front end portion of the turbine on the exhaust line to a front end portion of the compressor on the intake line; and a second controller controlling a flow rate of the exhaust gas supplied to the turbine, wherein the second controller controls the flow rate of the exhaust gas supplied to the turbine in exhaust recirculation through the EGR line.

Specifically, the second controller may increase the flow rate of the exhaust gas supplied to the turbine in the exhaust recirculation through the EGR line.

Specifically, the EGR system may further include a bypass line connecting a front end and a rear end of the turbine, the bypass line being opened/closed. The second controller may control the bypass line in the exhaust recirculation through the EGR line.

Specifically, the EGR system may further include a bypass line connecting a rear end of the compressor and a front end of the turbine, the bypass line being opened/closed. The second controller may control the bypass line in the exhaust recirculation through the EGR line, thereby supplying a portion of the scavenging gas discharged from the compressor to the turbine.

Specifically, the intake line may further include a cooler. The EGR system may further include a bypass line connecting a rear end of the cooler and a front end of the turbine, the bypass line being opened/closed. The second controller may control the bypass line in the exhaust recirculation through the EGR line, thereby supplying a portion of the scavenging gas discharged from the cooler to the turbine.

Specifically, the turbine may be a variable turbine controlling a nozzle vane provided therein. The second controller may increase a flow rate of the exhaust gas supplied to the turbine by controlling the nozzle vane in the exhaust recirculation through the EGR line.

Specifically, the cylinder may be operated in one of a gas mode in which driving power is generated by using gas fuel as a main fuel and a diesel mode in which driving power is generated by using diesel as a main fuel.

Specifically, the exhaust gas discharged from the cylinder may be introduced in a high pressure state to the compressor through the EGR line.

Specifically, an EGR blower pressurizing the exhaust gas may be omitted in the EGR line.

In accordance with still another aspect of the present invention, there is provided a ship including the EGR system.

### ADVANTAGEOUS EFFECTS

The EGR system in accordance with the present invention can decrease a methane slip amount, as compared with a case where an existing EGR system is simply applied when the dual fuel engine is operated in the gas mode.

The EGR system in accordance with the present invention can decrease a fuel consumption rate, as compared with the case where the existing EGR system is simply applied when the dual fuel engine is operated in the gas mode.

The EGR system in accordance with the present invention can decrease an amount of nitrous oxide generated, as compared with the case where the existing EGR system is simply applied when the dual fuel engine is operated in the gas mode.

In the EGR system in accordance with the present invention, the EGR blower is omitted. Thus, a change in structure of an engine system due to the EGR blower can be prevented, and cost for installation, operation and maintenance of the blower can be reduced.

### BRIEF DESCRIPTION OF THE DRAWINGS

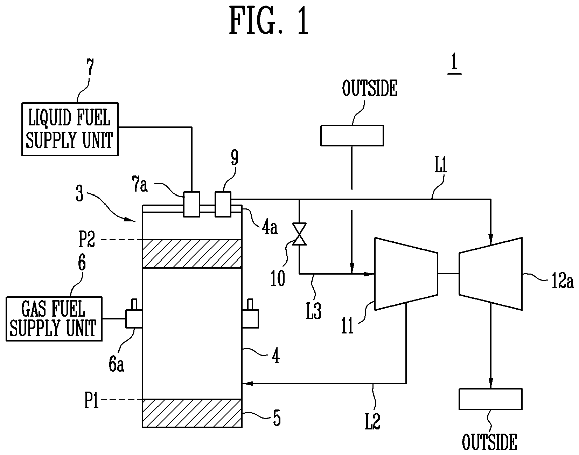

FIG. 1 is a conceptual view illustrating a case where an existing exhaust gas recirculation (EGR) system is applied to a dual fuel engine.

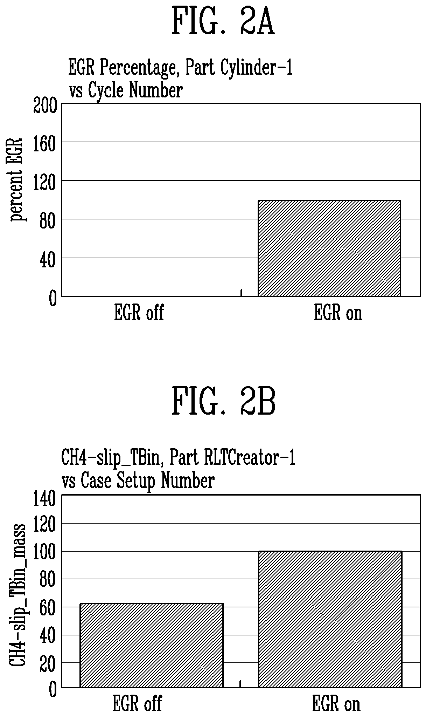

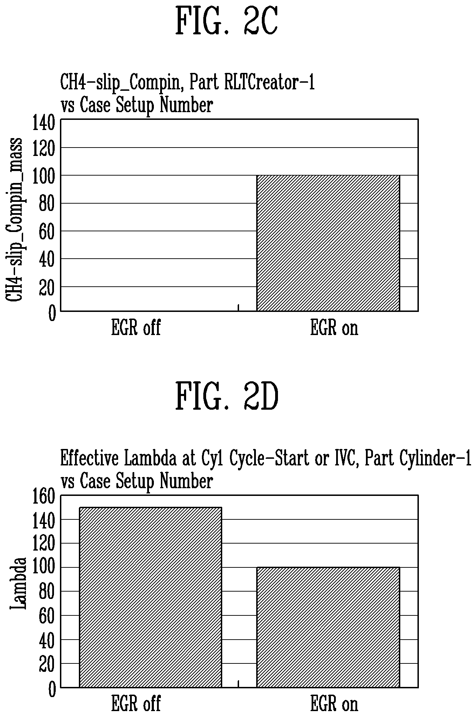

FIG. 2 illustrates graphs respectively showing, as relative ratios, A. whether to perform EGR, B. ratio of methane in exhaust gas, C. ratio of methane recirculated as scavenging gas, and D. effective lambda (air-fuel ratio) in a cylinder according to a case where the existing EGR system is applied to the dual fuel engine and is operated in a gas mode (EGR on) and a case where the existing EGR system is applied to the dual fuel engine and is not operated in the gas mode (EGR off).

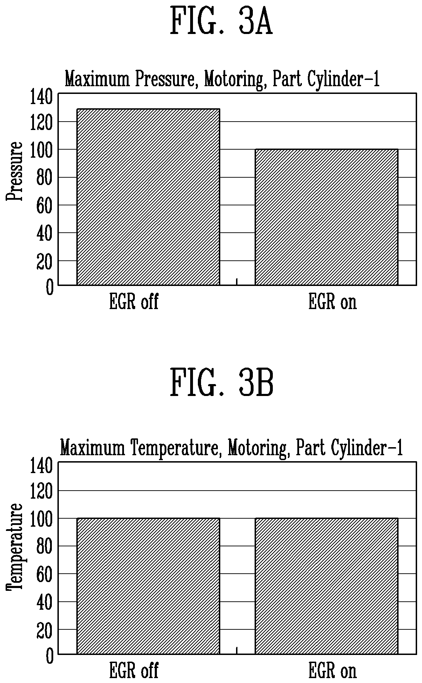

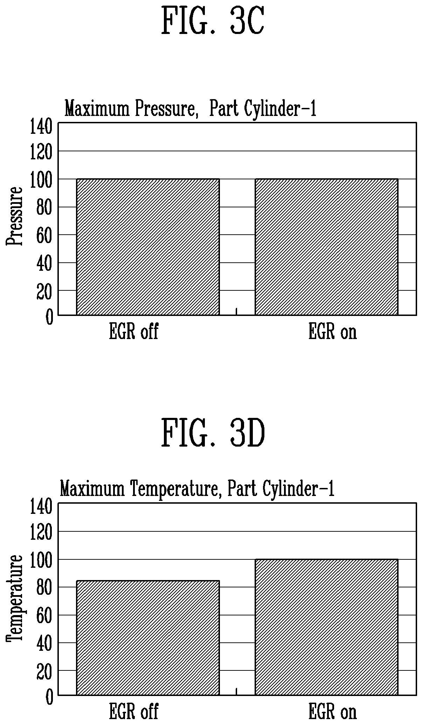

FIG. 3 illustrates graphs respectively showing, as relative ratios, A. maximum compression pressure of the cylinder, B. maximum compression temperature of the cylinder, C. maximum combustion pressure in the cylinder, and D. maximum combustion temperature in the cylinder according to the case where the existing EGR system is applied to the dual fuel engine and is operated in the gas mode (EGR on) and the case where the existing EGR system is applied to the dual fuel engine and is not operated in the gas mode (EGR off).

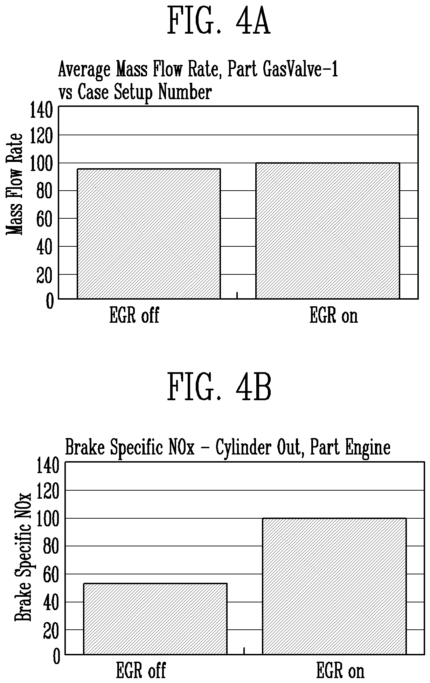

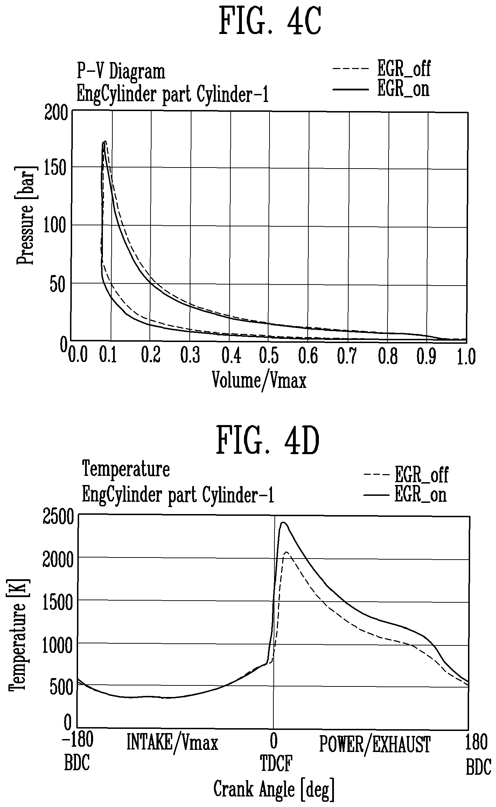

FIG. 4 illustrates graphs respectively showing, as relative ratios, A. gas fuel supply amount and B. nitrous oxide (NOx) generation amount according to the case where the existing EGR system is applied to the dual fuel engine and is operated in the gas mode (EGR on) and the case where the existing EGR system is applied to the dual fuel engine and is not operated in the gas mode (EGR off), and illustrates C. P-V diagram of the cylinder and D. diagram of temperature according to piston crank angle.

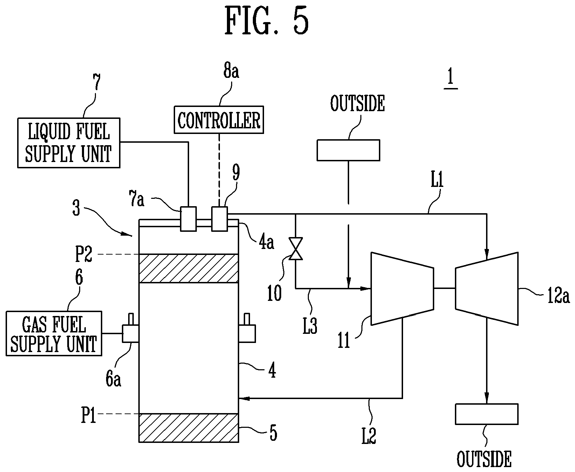

FIG. 5 is a conceptual view of an exhaust gas recirculation system in accordance with embodiment 1 of the present invention.

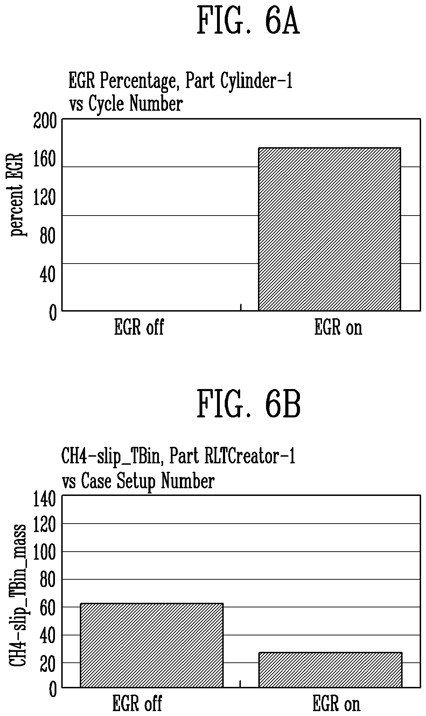

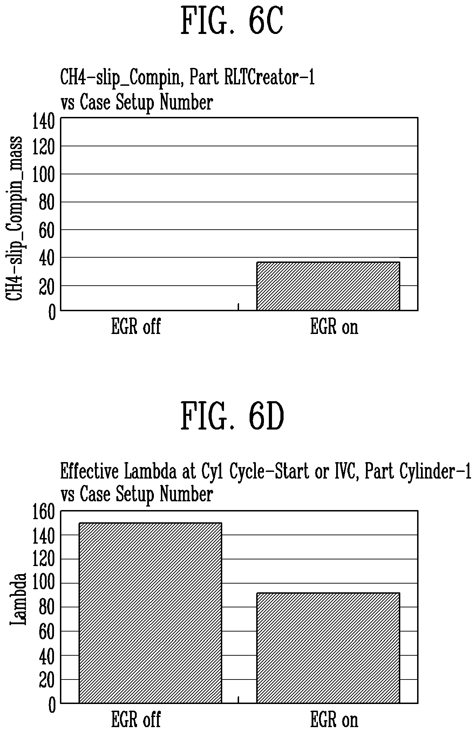

FIG. 6 illustrates graphs respectively showing, as relative ratios (EGR on), A. whether to perform EGR, B. ratio of methane in exhaust gas, C. ratio of methane recirculated as scavenging gas, and D. effective lambda (air-fuel ratio) in the cylinder in a case where the EGR system in accordance with the embodiment 1 of the present invention is operated in the gas mode with respect to the case where the existing EGR system is operated in the gas mode, and showing the case where the EGR system is operated in the gas mode together with a case where the EGR system is not operated in the gas mode (EGR off).

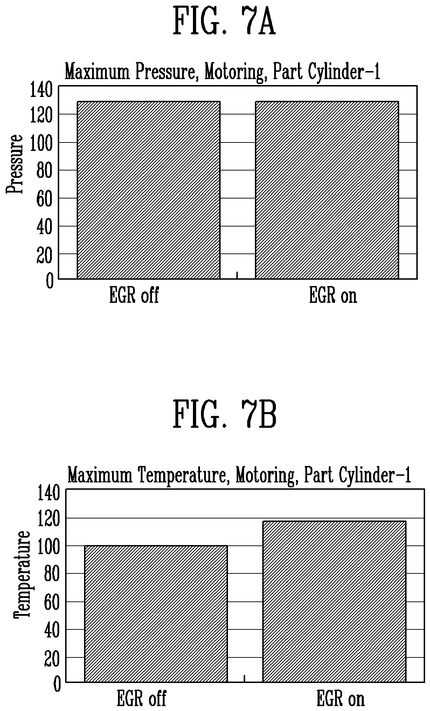

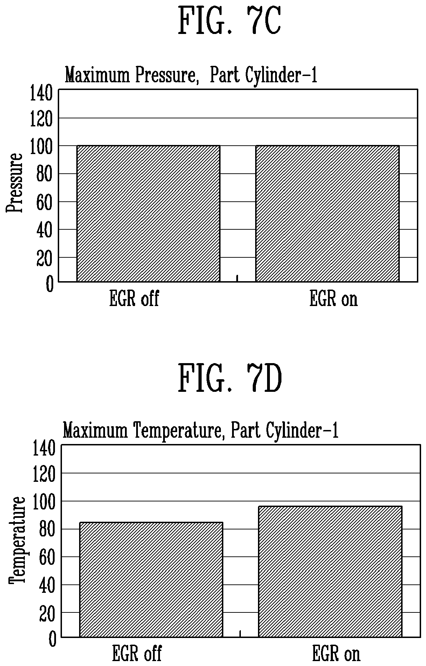

FIG. 7 illustrates graphs respectively showing, as relative ratios (EGR on), A. maximum compression pressure of the cylinder, B. maximum compression temperature of the cylinder, C. maximum combustion pressure in the cylinder, and D. maximum combustion temperature in the cylinder in the case where the EGR system in accordance with the embodiment 1 of the present invention is operated in the gas mode with respect to the case where the existing EGR system is operated in the gas mode, and showing the case where the EGR system is operated in the gas mode together with the case where the EGR system is not operated in the gas mode (EGR off).

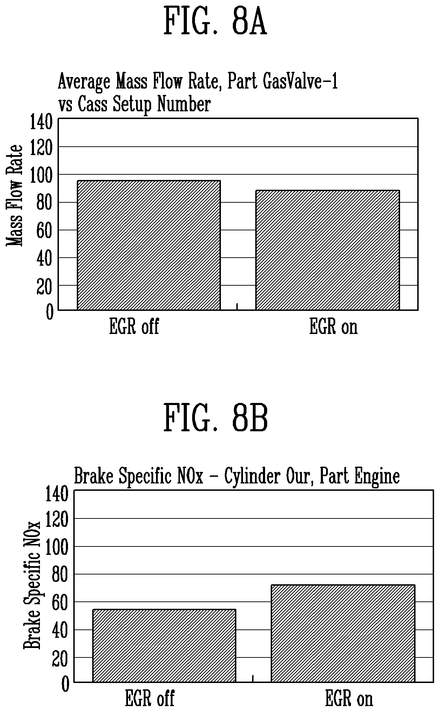

FIG. 8 illustrates graphs respectively showing, as relative ratios (EGR on), A. gas fuel supply amount and B. nitrous oxide (NOx) generation amount in the case where the EGR system in accordance with the embodiment 1 of the present invention is operated in the gas mode with respect to the case where the existing EGR system is operated in the gas mode, and showing the case where the EGR system is operated in the gas mode together with the case where the EGR system is not operated in the gas mode (EGR off).

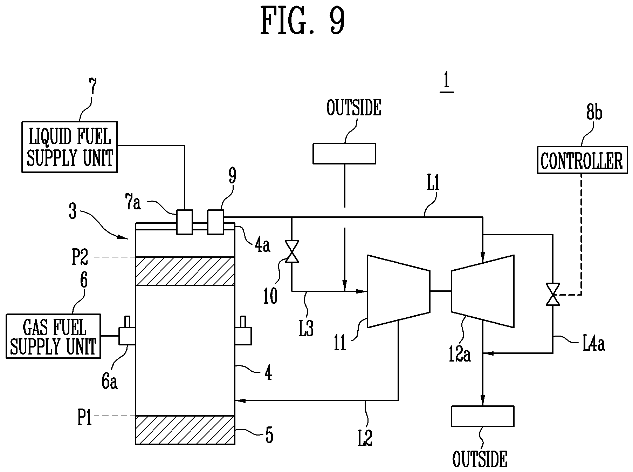

FIG. 9 is a conceptual view of an exhaust gas recirculation system in accordance with embodiment 2-1 of the present invention.

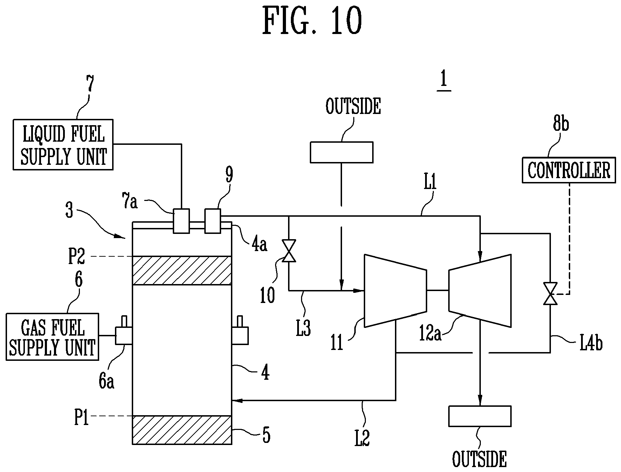

FIG. 10 is a conceptual view of an exhaust gas recirculation system in accordance with embodiment 2-2 of the present invention.

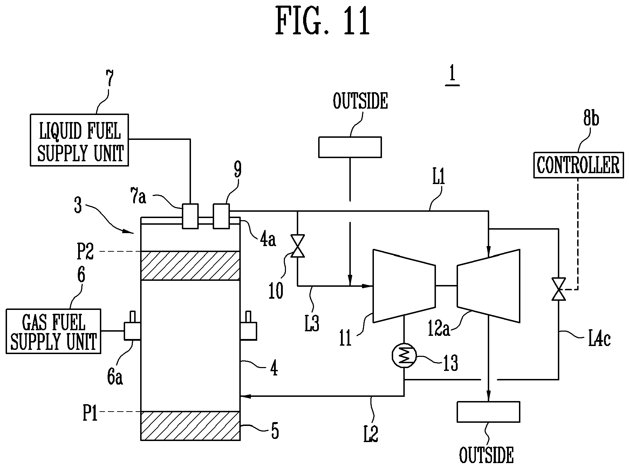

FIG. 11 is a conceptual view of an exhaust gas recirculation system in accordance with embodiment 2-3 of the present invention.

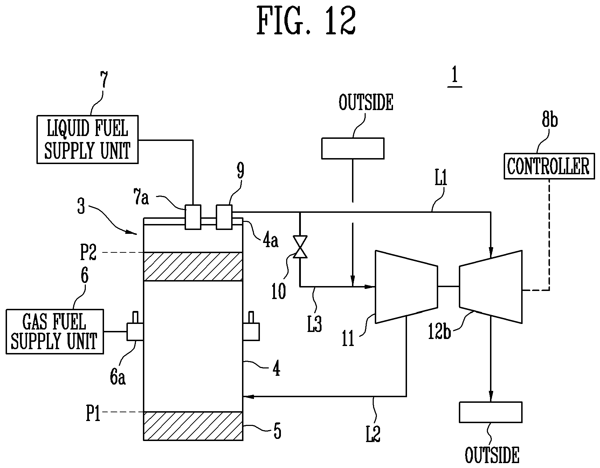

FIG. 12 is a conceptual view of an exhaust gas recirculation system in accordance with embodiment 2-4 of the present invention.

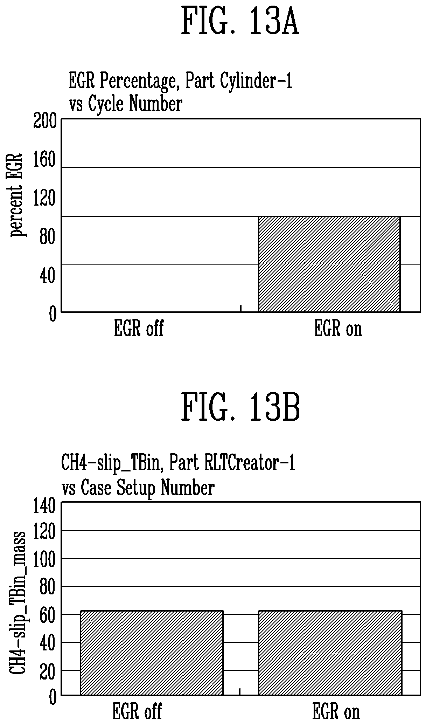

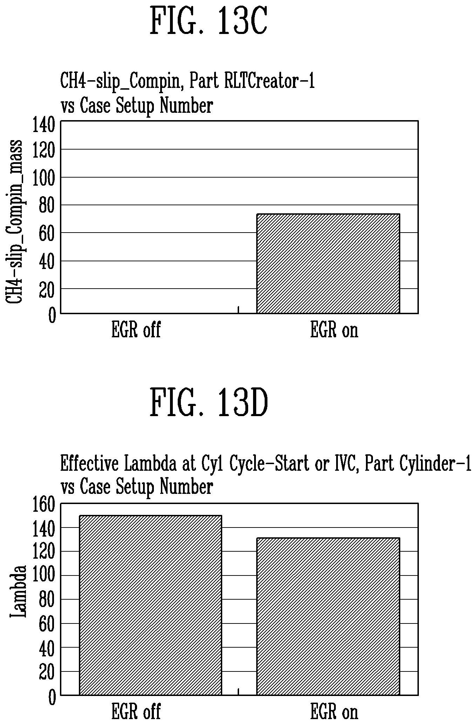

FIG. 13 illustrates graphs respectively showing, as relative ratios (EGR on), A. whether to perform EGR, B. ratio of methane in exhaust gas, C. ratio of methane recirculated as scavenging gas, and D. effective lambda (air-fuel ratio) in the cylinder in a case where the EGR system in accordance with the embodiment 2 of the present invention is operated in the gas mode with respect to the case where the existing EGR system is operated in the gas mode, and showing the case where the EGR system is operated in the gas mode together with a case where the EGR system is not operated in the gas mode (EGR off).

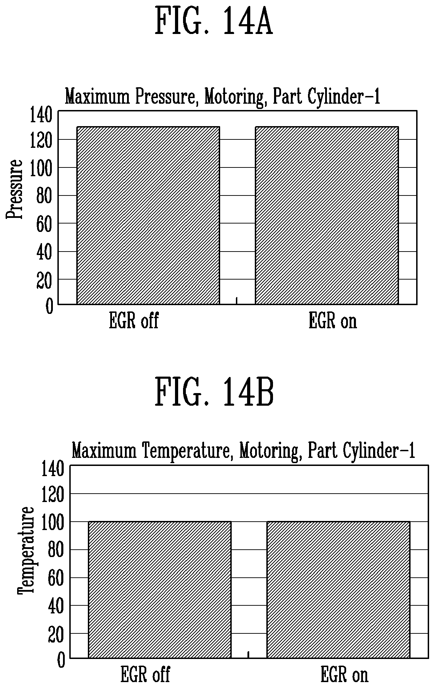

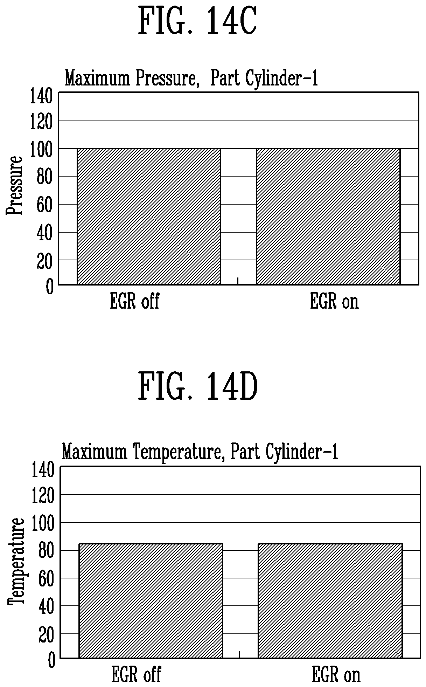

FIG. 14 illustrates graphs respectively showing, as relative ratios (EGR on), A. maximum compression pressure of the cylinder, B. maximum compression temperature of the cylinder, C. maximum combustion pressure in the cylinder, and D. maximum combustion temperature in the cylinder in the case where the EGR system in accordance with the embodiment 2 of the present invention is operated in the gas mode with respect to the case where the existing EGR system is operated in the gas mode, and showing the case where the EGR system is operated in the gas mode together with the case where the EGR system is not operated in the gas mode (EGR off).

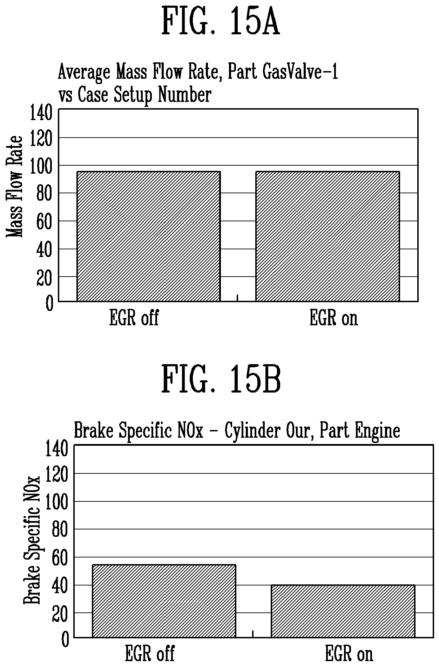

FIG. 15 illustrates graphs respectively showing, as relative ratios (EGR on), A. gas fuel supply amount and B. nitrous oxide (NOx) generation amount in the case where the EGR system in accordance with the embodiment 2 of the present invention is operated in the gas mode with respect to the case where the existing EGR system is operated in the gas mode, and showing the case where the EGR system is operated in the gas mode together with the case where the EGR system is not operated in the gas mode (EGR off).

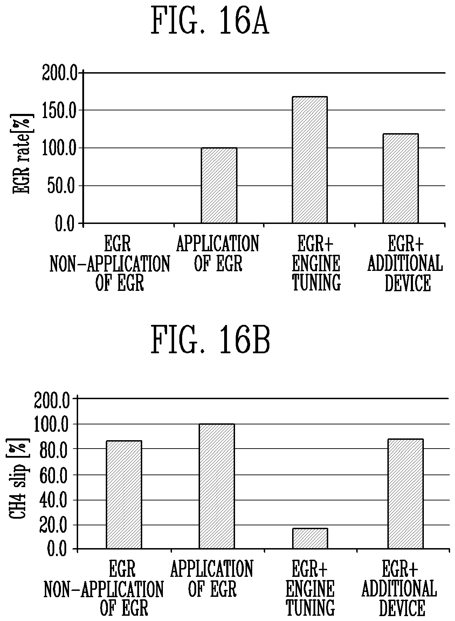

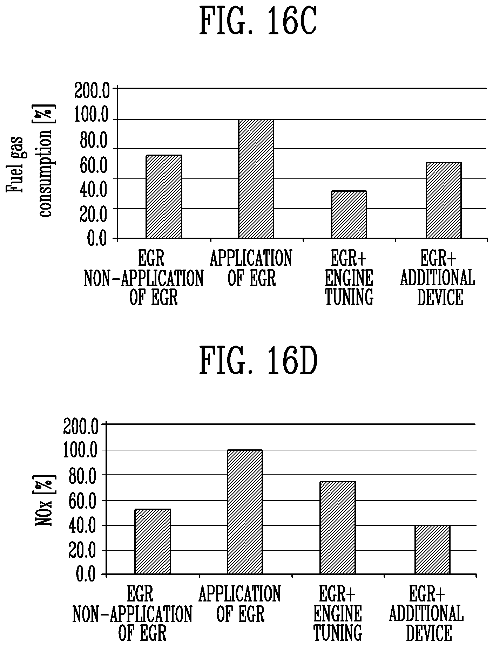

FIG. 16 illustrates graphs respectively showing, as relative ratios, A. EGR rate, B. methane slip ratio, C. gas fuel consumption rate, and D. nitrous oxide (NOx) generation rate in a case where the EGR system is not applied when the dual fuel engine is operated in the gas mode (non-application of EGR), in a case where the existing EGR system is applied and operated (application of EGR), in a case where the EGR system in accordance with the embodiment 2 of the present invention is applied and operated (EGR+engine tuning), and in a case where the EGR system in accordance with the embodiment 2 of the present invention is applied and operated (EGR+additional device).

### MODE FOR THE INVENTION

Other objects, specific advantages, and new features of the present invention will be more apparent from preferable embodiments and the following detailed description associated with the accompanying drawings. In the specification, when reference numerals are endowed to components in each drawing, it should be noted that like reference numerals denote like elements even though they are depicted in several drawings. Further, in the following description of the present invention, a detailed explanation of known related technologies may be omitted to avoid unnecessarily obscuring the subject matter of the present invention.

Hereinafter, high pressure (HP), low pressure (LP), high temperature, and low temperature are relative, and it is noted that they are not absolute numerical values.

Hereinafter, gas is LNG, LPG, ethane, etc., and may mean a substance having a boiling point lower than that at room temperature. Diesel is a liquid fuel, and includes all substances having calorific values.

Hereinafter, an engine may be a dual fuel engine which is operated in one of a gas mode in which a driving force is generated by using a gas fuel as a main fuel and a diesel mode in which a driving force is generated by using diesel as a main fuel. The engine generally includes a cylinder, a piston, a gas fuel supply unit, a liquid fuel supply unit, and an exhaust valve.

Hereinafter, a turbo charger generally includes a compressor and a turbine.

Hereinafter, an effective compression ratio is a ratio of a cylinder volume at a time at which the exhaust valve is closed to a cylinder volume when the piston is at a top dead point.

Hereinafter, compression pressure and temperature mean pressure and temperature of a mixture gas when the piston is at the top dead point without any combustion process.

Hereinafter, combustion pressure and temperature mean explosion pressure and temperature, applied to the piston during a combustion period.

First, a case where an existing exhaust gas recirculation (EGR) system is applied to a dual fuel engine will be described with reference to FIGS. 1 to 4.

FIG. 1 is a conceptual view illustrating a case where an EGR system is applied to a dual fuel engine. Hereinafter, the existing EGR system means an EGR system applicable to reduce an amount of nitrous oxide generated when a diesel engine or a dual fuel engine is operated in a diesel mode.

Referring to FIG. 1, the existing EGR system 2 includes an engine 3, an EGR valve 10, a compressor 11, and a turbine 12a. Also, the existing EGR system 2 includes an exhaust line L1 connecting the turbine 12a from an exhaust valve 9, an intake line L2 connecting a cylinder 4 from the compressor 11, and an EGR line L3 connecting a front end portion of the turbine 12a on the exhaust line L1 to a front end portion of the compressor 11 on the intake line L2.

The cylinder 4 is used to burn fuel. The cylinder 4 may be formed in an engine block (not shown) of the engine 3. The cylinder 4 has a combustion chamber to which air, fuel, and the like can be supplied. The combustion chamber may be formed in a cylindrical shape of which the inside is empty. A cylinder liner (not shown) may be installed between the cylinder 4 and the engine block. A cylinder cover 4a may be installed at an upper side of the cylinder 4. A piston 5 may be installed in the cylinder 4 to be movable. For example, the piston 5 may reciprocate in a vertical direction at the inside of the combustion chamber. The vertical direction may be a direction parallel to the direction of gravity, but may be another direction. A gas fuel supply unit 6 for supplying a gas fuel and as liquid fuel supply unit 7 for supplying a liquid fuel may be coupled to the cylinder 4. Accordingly, the cylinder 4 may be supplied with at least one of the gas fuel and the liquid fuel from the gas fuel supply unit 6 and the liquid fuel supply unit 7. The gas fuel supply unit 6 and the liquid fuel supply unit 7 may supply the gas fuel and the liquid fuel to the cylinder 4 after a scavenging gas as external air is supplied through a scavenging hole (not shown) installed at a lower side of the cylinder 4. The gas fuel supply unit 6 and the liquid fuel supply unit 7 may supply the liquid fuel after the gas fuel is supplied. Therefore, the engine 3 in accordance with the present invention may be a dual fuel engine which sequentially supplies the scavenging gas, the gas fuel, and the liquid fuel to the cylinder 4. The scavenging hole is a hole formed while penetrating the cylinder at the lower side of the cylinder 4, and may be installed to be connected to a scavenging receiver (not shown) filled with air. Accordingly, the air filled in the scavenging receiver may be supplied to the cylinder 4 through the scavenging hole. A turbo charger compresses and supplies air by using exhaust gas discharged from the cylinder 4, so that the scavenging receiver can be filled with the air. The combustion chamber of the cylinder 4 may have a volume increased/decreased as the piston 5 reciprocates. For example, when the piston 5 moves in an upper direction, the volume of the combustion chamber may decrease. Fuel and air, which are supplied to the combustion chamber, may be compressed. When the piston 5 moves at a bottom dead point P1 and then reaches a top dead point P2, a diesel injector or a separate pilot injector 7a, which is installed at the upper side of the cylinder 4, ignites the compressed fuel by supplying diesel, so that a fuel in which the gas fuel and the air are mixed together is burned and exploded, thereby moving the piston 5 in a lower direction. Accordingly, a driving force is generated, and exhaust gas may be generated in the combustion chamber. When the piston 5 moves in the lower direction, the volume of the combustion chamber may increase. When the piston 5 moves toward the bottom dead point P1, the air filled in the scavenging receiver may be supplied to the combustion chamber. Therefore, the exhaust gas generated by combustion of the fuel in the combustion chamber may be discharged to the outside of the combustion chamber via the exhaust valve 9 by the air supplied from the scavenging receiver. The exhaust gas may be discharged to the outside of the combustion chamber due to a pressure difference between the scavenging receiver and an exhaust gas receiver (not shown) which stores the exhaust gas. The exhaust gas discharged from the combustion chamber may be discharged along the exhaust line L1 connected to the exhaust valve 9 coupled to the upper side of the cylinder 4, to be supplied to the exhaust gas receiver.

The piston 5 is used to compress air and fuel, which are supplied to the combustion chamber. The piston 5 is installed to be movable in the combustion chamber. For example, the piston 5 may reciprocate between the bottom dead point P1 and the top dead point P2 at the inside of the combustion chamber. The piston 5 may be formed in a cylindrical shape, but may be formed in another shape as long as the piston 5 can compress the fuel and the air while moving in the combustion chamber. The piston 5 may be moved in the upper direction by a crank shaft (not shown) which transfers a driving force. The piston 5 may be connected to the crank shaft through a piston rod (not shown) and a connecting rod (not shown), which have a rod shape. The piston 5 may move in the upper direction as the crank shaft rotates. When the piston 5 is moved in the upper direction by the crank shaft, the piston 5 may compress the fuel and the air. The piston 5 may move in the lower direction as the fuel and the air, which are supplied to the cylinder 4 at the top dead point P2, are mixed, burned and then exploded. Therefore, the piston 5 may reciprocate between the bottom dead point P1 and the top dead point P2 at the inside of the cylinder 4. With respect to a compression direction of the piston 5, the bottom dead point P1 is a point at which the piston 5 is located at a lowest position in the cylinder 4, and the top dead point P2 is a point at which the piston 5 is located at a highest position in the cylinder 4. In the vicinity of the top dead point P2, the piston 5 may explode the fuel compressed to generate a driving force.

The gas fuel supply unit 6 and the liquid fuel supply unit 7 are respectively used to supply the gas fuel and the liquid fuel to the cylinder 4. The gas fuel supply unit 6 may be coupled to the cylinder 4 to be located between the top dead point P2 and the bottom dead point P1 of the piston 5. For example, the gas fuel supply unit 6 may supply the gas fuel to the cylinder 4 in the middle while the piston 5 moved from the bottom dead point P1 to the top dead point P2. The gas fuel supply unit 6 may mix the gas fuel and air and supply the mixture to the cylinder 4 in the middle while the piston 5 moved from the bottom dead point P1 to the top dead point P2. For example, the gas fuel supply unit 6 may be supplied with additional air from an auxiliary air supply unit (not shown) to supply the gas fuel and the air together when the gas fuel supply unit 6 supplies the gas fuel in the middle while the piston 5 moved from the bottom dead point P1 to the top dead point P2. Thus, the engine 3 in accordance with the present invention can mix the gas fuel and the air and supply the mixture to the cylinder 4 in the middle while the piston 5 moved from the bottom dead point P1 to the top dead point P2, so that the air and the fuel are uniformly mixed as compared with when only the gas fuel is supplied to the cylinder 4. Accordingly, occurrence of abnormal combustion such as knocking or advanced ignition can be reduced or prevented. The gas fuel supply unit 6 may supply the gas fuel to the cylinder 4 after scavenging air starts being supplied to the cylinder 4 through the scavenging hole.

The gas fuel supply unit 6 is used to supply a gas fuel (not shown) to the cylinder 4. The gas fuel supply unit 6 may supply the gas fuel to the cylinder 4 in the middle while the piston 5 moves from the bottom dead point P1 to the top dead point P2. The cylinder 4 may be in a state in which the cylinder 4 is closed by the exhaust valve 9. When a ship is an LNG carrier, the gas fuel supply unit 6 may evaporate LNG store in an LNG storage tank (not shown) and supply the evaporated LNG as a gas fuel to the cylinder 4. The gas fuel supply unit 6 may supply boil of gas (BOG) generated in the LNG storage tank to the cylinder 4. The gas fuel supply unit 6 may be installed to be connected to the auxiliary air supply unit. Therefore, an air mixed gas fuel (not shown) in which the gas fuel and the air are mixed may be supplied to the cylinder 4. The pressure of the gas fuel or the air mixed gas fuel, which the gas fuel supply unit 6 supplies to the cylinder 4 may be between about 3 bars and about 30 bars, preferably, between about 5 bars and about 22 bars according to an engine load. A pressure of the air additionally supplied to the auxiliary air supply unit may be relatively lower than that of the gas fuel supplied by the gas fuel supply unit 6. This is for the purpose of smoothly supplying the gas fuel to the cylinder 4. When the pressure of the gas fuel or the air mixed gas fuel exceeds 30 bars, the capacity of each of the gas fuel supply unit 6 and the auxiliary air supply unit, which supply the air the cylinder 4, is to be increased, and therefore, the size of the entire engine may be increased. When the pressure of the gas fuel or the air mixed gas fuel is less than 3 bars, the gas fuel or the air mixed gas fuel may not be smoothly supplied to the cylinder 4 due to the pressure of the scavenging air supplied to the cylinder 4. When the piston 5 passes a point at which the gas fuel supply unit 6 is coupled to a sidewall of the cylinder 4 with respect to a direction in which the piston 5 is compressed, the gas fuel supply unit 6 may not supply the gas fuel to the cylinder 4. This is because connection between the cylinder 4 and the gas fuel supply unit 6 is blocked. The gas fuel supply unit 6 may open/close the opening of a gas fuel supply pipe connected to a fuel injection nozzle installed at the cylinder liner, to supply the gas fuel to the cylinder 4 or to block the supply of the gas fuel to the cylinder 4. The gas fuel supply unit 6 may adjust a size with which the opening of the gas fuel supply pipe is opened or an opening time for which the opening of the gas fuel supply pipe is opened, to adjust an amount of the fuel gas supplied to the cylinder 4. For example, the gas fuel supply unit 6 may open the opening of the gas fuel supply pipe to become large or increase the opening time, so that the amount of the gas fuel supplied to the cylinder 4 can be increased. Also, the gas fuel supply unit 6 may open the opening of the gas fuel supply pipe to become small or decrease the opening time, so that the amount of the gas fuel supplied to the cylinder 4 can be decreased. The gas fuel supply unit 6 may increase/decrease a transfer force of a gas fuel transfer device for supplying the gas fuel to the cylinder 4, to adjust the amount of the gas fuel supplied to the cylinder 4. The gas fuel transfer device may be at least one of a compressor, an impeller, and a blower.

The liquid fuel supply unit 7 is used to supply a liquid fuel (not shown) to the cylinder 4. The liquid fuel supply unit 7 may supply the liquid fuel to the cylinder 4 after the gas fuel is supplied to the cylinder 4 in the middle while the piston 5 moves from the bottom dead point P1 to the top dead point P2. Preferably, the liquid fuel supply unit 7 may supply the liquid fuel when the piston 5 reaches the vicinity of the top dead point P2. The cylinder 4 may be in a state in which the cylinder 4 is closed by the exhaust valve 9. The liquid fuel supply unit 7 may be supplied with the liquid fuel from the liquid fuel storage tank (not shown) in which the liquid fuel is stored to supply the liquid fuel to the cylinder 4. The liquid fuel may be diesel, but the present invention is not necessarily limited thereto. The liquid fuel supply unit 7 may be coupled to the diesel injector or the separate pilot injector 7a, which is installed at the cylinder cover 4a, to supply the liquid fuel to the cylinder 4 at the upper side of the cylinder 4. However, the present invention is not limited thereto, and the liquid fuel supply unit 7 may be installed at another position of the cylinder cover 4a or the cylinder 4, such as a pilot injector (not shown), to supply the liquid fuel to the cylinder 4 as long as the liquid fuel supply unit 7 can supply the liquid fuel when the piston 5 is located in the vicinity of the top dead point P2. The liquid fuel supply unit 7 may supply, to the cylinder 4, a liquid fuel amount greater than a diesel fuel amount supplied in a gas mode operation in which the engine is propelled by using the gas fuel as a main fuel. The liquid fuel supply unit 7 may increase an injection period in which the diesel injector or the separate pilot injector 7a injects the liquid fuel into the cylinder 4 or increase an injection pressure with which the diesel injector or the separate pilot injector 7a injects the liquid fuel into the cylinder 4, so that the liquid fuel amount greater than the diesel fuel amount supplied in the gas mode operation can be supplied to the cylinder 4. The liquid fuel supply unit 7 may open/close the opening of a liquid fuel supply pipe connected to the diesel injector or the separate pilot injector 7a, to supply the liquid fuel to the cylinder 4 or to block the supply of the liquid fuel to the cylinder 4. The liquid fuel supply unit 7 may adjust a size with which the opening of the liquid fuel supply pipe is opened or an opening time for which the opening of the liquid fuel supply pipe is opened, to adjust an amount of the liquid fuel supplied to the cylinder 4. For example, the liquid fuel supply unit 7 may open the opening of the liquid fuel supply pipe to become large or increase the opening time for which the opening of the liquid fuel supply pipe is opened, so that the amount of the liquid fuel supplied to the cylinder can be increased. Also, the liquid fuel supply unit 7 may open the opening of the liquid fuel supply pipe to become small or decrease the opening time for which the opening of the liquid fuel supply pipe is opened, so that the amount of the liquid fuel supplied to the cylinder can be decreased. The liquid fuel supply unit 7 may increase/decrease a transfer force of a liquid fuel transfer device for supplying the liquid fuel to the cylinder 4, to adjust the amount of the liquid fuel supplied to the cylinder 4. The liquid fuel transfer device may be at least one of a compressor, an impeller, and a blower. The liquid fuel supply unit 7 may allow ignition to occur by supplying the liquid fuel to the cylinder 4 when the gas fuel supplied at a sidewall of the cylinder by the gas fuel supply unit 6 and the scavenging air supplied by the scavenging receiver move toward the top dead end P2 and then compressed.

The exhaust gas burned in the engine 3 may pass through the exhaust line L1 through the exhaust valve 9 provided at the upper side of the cylinder 4, and be introduced to the turbine 12a connected to the exhaust line L1 to be discharged to the outside, or be joined with the scavenging gas compressed by the compressor 11 to be again supplied to the engine 3.

The turbo charger compresses air by using the energy of high pressure and high temperature of the exhaust gas discharged from the engine and injects the compressed air into the engine 3, so that the efficiency of fuel used in the engine 3 can be improved. The turbo charger includes the compressor 11 and the turbine 12a.

The compressor 11 is connected to the intake line L2 to compress air and then supply the compressed air to the engine 3. Air from the outside is introduced to the compressor 11. The introduced air is compressed by rotation of a wheel (not shown) built in the compressor 11, to become the scavenging gas.

The turbine 12a may be connected to the exhaust line L1 to be driven by being supplied with the exhaust gas from the engine 3. The turbine 12a may be connected to the compressor 11 through a shaft to transfer rotary power to the compressor 11. The driving of the turbine 12a may be made when a wheel (not shown) of the turbine 12a, which is freely supported in the turbine 12a, is rotated by energy of the exhaust gas which is burned in the engine 3 and then introduced to the turbine 12a. The rotational torque of the wheel built in the turbine 12a may be transferred to the wheel of the compressor 11 by the shaft, and air introduced when the wheel of the compressor 11 is rotated may be compressed to become the scavenging gas.

The scavenging gas discharged from the turbo charger is introduced to the engine 3 via the intake line L2. A cooler (not shown) for lowering the temperature of the scavenging gas and a humidity removal device (not shown) for removing humidity from the scavenging gas may be installed on the intake line L2, so that the scavenging gas discharged from the turbo charger is lowered to a temperature required in the engine 3, and unnecessary humidity is removed. The cooler may perform heat-exchange with the exhaust gas by using water as a refrigerant, to cool the exhaust gas. The humidity removal device may be replaced with a humidity removal device known in the art, and therefore, its detailed description will be omitted.

The EGR line L3 may connect the exhaust line L1 and the intake line L2 to each other to circulate the exhaust gas. One end portion of the EGR line L3 may be connected to the front end portion of the turbine 12a on the exhaust line L1, and the other end portion of the EGR line L3 may be connected to the front end portion of the compressor 11 on the intake line L2. The front end portion of the turbine 12a is an upstream portion of the exhaust line L1 with respect to a flow direction of the exhaust gas, and the front end portion of the compressor 11 is an upstream portion of the intake line L2 with respect to a flow direction of the scavenging gas. By the connection structure of the EGR line L3, the exhaust gas passing through the turbine 12a and the exhaust gas circulated to the compressor 11 can flow independently from each other. That is, a portion of the exhaust gas is circulated to the compressor 11 via the EGR line L3, and the other of the exhaust gas is discharged to the outside via the turbine 12a. The exhaust gas discharged from the engine 3 is introduced in a high pressure state to the compressor 11 through the EGR line L3. Therefore, a component for pressurizing the exhaust gas, e.g., an EGR blower (not shown) may be omitted in the EGR line L3. The EGR blower is a component for allowing the exhaust gas to be forcibly introduced to the intake line L2. While the EGR blower is driven, power of not more than 100 kW to no less than 500 kW is continuously consumed. When the EGR blower is omitted, power consumption of the system can be decreased.

In addition, when the high pressure exhaust gas is introduced through the EGR line L3, the compressor 11 can decrease a load, as compared with when the air introduced from the outside is pressurized. That is, power consumption caused by the compressor 11 can also be decreased.

Meanwhile, the exhaust gas is joined with the scavenging gas through the EGR line L3, so that combustion maximum temperature is lowered while minimizing a decrease in power, thereby reducing the discharge amount of nitrous oxide. This is because, when the exhaust gas is mixed with the scavenging gas introduced to the cylinder, combustion temperature and oxygen concentration are lowered, thereby suppressing occurrence of the nitrous oxide.

Additionally, the EGR valve 10 may be provided on the EGR line L3. The EGR valve 10 is a component for adjusting the flow rate of the exhaust gas such that the exhaust gas is recirculated through the EGR line L3. The EGR valve 10 may be opened when the exhaust gas is recirculated through the EGR line L3.

In addition, an EGR cooler may be provided on the EGR line L3 such that the temperature of the exhaust gas is lowered. Humidity may be removed through a humidity removal device (not shown). The EGR cooler may lower the temperature of the exhaust gas through water.

FIG. 2 illustrates graphs respectively showing, as relative ratios, A. whether to perform EGR, B. a ratio of methane in exhaust gas, C. a ratio of methane recirculated as scavenging gas, and D. an effective lambda (air-fuel ratio) in the cylinder according to a case where the existing EGR system 2 is applied to the dual fuel engine and is operated in the gas mode (EGR on) and a case where the existing EGR system 2 is applied to the dual fuel engine and is not operated in the gas mode (EGR off).

FIG. 2A is a graph showing whether to perform EGR. Hereinafter, system environments, etc. in the case where the EGR system 2 is operated (EGR on) and the case where the EGR system 2 is not operated (EGR off) will be compared and described.

FIG. 2B is a graph relatively showing a ratio of methane (CH₄) in exhaust gas flowing through the exhaust line L1 at a front end of the turbine 12a. In a low pressure engine such as X-DF, methane slip may occur, in which the methane is mixed with the exhaust gas and then discharged from the cylinder 4 due to partial combustion of fuel. In the case where the EGR system 2 is operated, the efficiency of the engine 3 is decreased while the exhaust gas and scavenging gas introduced from the outside are mixed to be supplied to the cylinder 4, and hence an amount of fuel which is not burned may increase, as compared with the case where the EGR system 2 is not operated.

FIG. 2C is a graph relatively showing a ratio of methane recirculated as the scavenging gas. In the case where the EGR system 2 is not operated, mixture of the exhaust gas and scavenging gas through the EGR line L3 is not made, and hence the methane is not detected. In the case where the EGR system 2 is operated, methane in the exhaust gas may be introduced to the compressor 11 through the EGR line 11 and then introduced to the intake line L2.

FIG. 2D is a graph relatively showing an effective lambda (actual air-fuel ratio/theoretical air-fuel ratio) in the cylinder 4. The control of an air-fuel ratio is important to stably operate the engine, particularly, the dual fuel engine. When the air-fuel ratio becomes low as an air amount with respect to a gas amount is reduced, knocking may occur. When the air-fuel ratio becomes high as the air amount with respect to the gas amount is increased, misfiring may occur. In addition, the maximum combustion temperature of the engine 3 may be changed according to the air-fuel ratio, and this has influence on an amount of nitrous oxide generated in the exhaust gas. In the case where the EGR system 2 is not operated, mixture of the exhaust gas and scavenging gas through the EGR line L3 is not made, and hence a relatively large amount of air (oxygen) exists in the scavenging gas supplied to the cylinder 4 through the intake line L2. Therefore, the air-fuel ratio is relatively high. On the other hand, in the case where the EGR system 2 is operated, an amount of air in the combustion chamber of the cylinder 4 decreases due to the mixture of the exhaust gas and scavenging gas through the EGR line L3, and hence the air-fuel ratio is relatively low.

FIG. 3 illustrates graphs respectively showing, as relative ratios, A. maximum compression pressure of the cylinder, B. maximum compression temperature of the cylinder, C. maximum combustion pressure in the cylinder, and D. maximum combustion temperature in the cylinder according to the case where the existing EGR system 2 is applied to the dual fuel engine and is operated in the gas mode (EGR on) and the case where the existing EGR system 2 is applied to the dual fuel engine and is not operated in the gas mode (EGR off). Hereinafter, subsequently to the description related to FIG. 2, system environments, etc. in the case where the EGR system 2 is operated (EGR on) and the case where the EGR system 2 is not operated (EGR off) will be compared and described.

FIG. 3A is a graph relatively showing a maximum compression pressure of the cylinder 4. In the case where the EGR system 2 is operated, the maximum compression pressure may relatively decrease, as compare with the case where the EGR system 2 is not operated. In the case where the EGR system 2 is operated, a portion of the exhaust gas flowing through the exhaust line L1 flows into the cylinder 4 via the compressor 11 and the intake line L2 through the EGR line L3, and therefore, an amount of the exhaust gas introduced to the turbine 12a along the exhaust line L1 decreases. Since the turbine 12a is driven by being supplied with the exhaust gas, a decrease in exhaust energy due to the decrease in the amount of the exhaust gas results in a decrease in number of revolution of the wheel of the turbine 12a. When the number of revolution of the wheel of the turbine 12a decreases, the number of revolution of the compressor 11 connected through the shaft also decreases, so that the inflow rate of a mixed air in which the exhaust gas introduced through the EGR line L3 and air introduced from the outside are mixed together decreases. Since an initial pressure of the combustion chamber in the cylinder 2 decreases as the amount of the mixed air supplied to the cylinder 4 through the intake line L2 decreases, the maximum compression pressure of the cylinder 4 also decreases.

FIG. 3B is a graph relatively showing a maximum compression temperature of the cylinder 4. In the case where the EGR system 2 is operated, the maximum compression temperature of the cylinder 4 is minutely low, as compared with the case where the EGR system 2 is not operated. The specific heat ratio of gas in the combustion chamber of the cylinder 4 decreases as the temperature of the scavenging gas introduced to the combustion chamber increases due to the operation of the EGR system 2, and hence the maximum compression temperature of the cylinder 4 decreases.

FIG. 3C is a graph relatively showing a maximum combustion pressure in the cylinder 4. In the case where the EGR system 2 is operated, a maximum combustion pressure in the cylinder 4 is similar to that in the case where EGR system 2 is not operated. This is a result represented since the maximum combustion pressure in the case where EGR system 2 is operation is set to a level similar to that of the maximum combustion pressure in the case where the EGR system 2 is not operated. In the case where EGR system 2 is operated, the pressure of the scavenging gas introduced to the combustion chamber is low, and therefore, the compression pressure in the cylinder 4 becomes low. This results in deterioration of the efficiency of the engine 3. In the case where the EGR system is operated, the maximum combustion pressure is set to a level similar to that in the case where the EGR system 2 is not operated so as to compare an effect in the case where the EGR system 2 is operated with that in the case where the EGR system 2 is not operated, in a state in which a certain engine efficiency or more is ensured even when the EGR system 2 is operated. In the case where the EGR system 2 is operated, an amount of gas fuel increases, which is required to set power generated in the cylinder 4 to a level similar to that in the case where EGR system 2 is not operated.

FIG. 3D is a graph relatively showing a maximum combustion temperature in the cylinder 4. In the case where the EGR system 2 is operation, a maximum combustion temperature in the cylinder 4 is higher than that in the case where the EGR system 2 is not operated. As described above in FIG. 2D, the amount of air introduced to the cylinder 4 through the intake line L2 decreases as the EGR system 2 is operated, so that the air-fuel ratio decreases. When the engine 3 is operated in the diesel mode, the maximum combustion temperature becomes low as the air-fuel ratio decreases. Therefore, the amount of nitrous oxide generated in the exhaust gas may be reduced. However, unlike the diesel mode, when the engine 3 is operated in the gas mode, gas fuel and air exist in a state in which the gas fuel and the air are mixed in the combustion chamber of the cylinder 4. Hence, the mixture gas is burned more rapidly as the air-fuel ratio becomes lower, and therefore, the maximum combustion temperature in the cylinder 4 may further increase.

FIG. 4 illustrates graphs respectively showing, as relative ratios, A. gas fuel supply amount and B. nitrous oxide (NOx) generation amount according to the case where the existing EGR system 2 is applied to the dual fuel engine and is operated in the gas mode (EGR on) and the case where the existing EGR system 2 is applied to the dual fuel engine and is not operated in the gas mode (EGR off), and illustrates C. P-V diagram of the cylinder and D. diagram of temperature according to piston crank angle. Hereinafter, subsequently to the description related to FIGS. 2 and 3, system environments, etc. in the case where the EGR system 2 is operated (EGR on) and the case where the EGR system 2 is not operated (EGR off) will be compared and described.

FIG. 4A is a graph relatively showing a supply amount of gas fuel required with respect to that the same engine power in the case where the EGR system 2 is operated and the case where the EGR system 2 is not operated. As described above in FIG. 3C, in the case where the EGR system 2 is operated, the pressure of the scavenging gas introduced in the combustion chamber decreases, an energy supply amount, i.e., a supply amount of gas fuel supplied to the cylinder 4 is to be increased so as to ensure and maintain power having the same level as the case where the EGR system 2 is not operated.

FIG. 4B is a graph relatively showing an amount of nitrous oxide in the exhaust gas. As described above in FIG. 3D, when the air-fuel ratio decreases in the case where the EGR system 2 is operated in the gas mode, the combustion of the gas fuel is further accelerated, so that the maximum combustion temperature is further increased. An oxidation reaction of nitrogen in the exhaust gas is accelerated due to the high combustion temperature, and therefore, the amount of nitrous oxide generated increases.

An oxidation reaction of nitrogen in the exhaust gas is accelerated due to the high combustion temperature, so that the amount of the nitrous oxide generated is increased.

FIG. 4C illustrates a P-V diagram of the cylinder 4, and FIG. 4D illustrates a diagram of temperature according to crank angle of the piston 5. In the case where the EGR system 2 is operated, a difference between the compression pressure and the maximum compression pressure is to be increased so as to ensure the same engine power (the same area on the diagram) as the case where the EGR system 2 is not operated. This represents that gas fuel is to be additionally supplied so as to obtain an effective effect according to application of the EGR system 2 when the dual fuel engine is operated in the gas mode instead of the diesel mode.

Hereinafter, an embodiment of the present invention will be described, in which an effective effect according to application of an EGR system is ensured even when the dual fuel engine is operated in the gas mode, as compared with the existing EGR system 2.

Hereinafter, an EGR system 1 in accordance with embodiment 1 of the present invention will be described in detail with reference to FIGS. 5 to 8.

Referring to FIG. 5, the EGR system 1 in accordance with the embodiment 1 of the present invention is provided as a system which further includes a first controller 8a for controlling opening/closing of the exhaust valve 9 in the above-described existing EGR system 2. Hereinafter, in this embodiment, portions different from those of the existing EGR system 2 will be mainly described, and portions which will not be described below are the same as those of the above-described embodiment.

The first controller 8a may control a closing timing of the exhaust valve 9, when exhaust is recirculated through EGR line L3 according to the operation of the EGR system 1 when the dual fuel engine is operated in the gas mode. Preferably, the first controller 8a may advance the closing timing of the exhaust valve 9. When the dual fuel engine is operated in the gas mode, closing of the exhaust valve 9 may be made after the supply of scavenging gas to the combustion chamber in the cylinder 4 and the supply of gas fuel by the gas fuel supply unit 6 are completed. The supply of the scavenging gas to the combustion chamber in the cylinder 4 may be started in the middle while the piston 5 moves from the top dead point P2 to the bottom dead point P1, and be completed in the middle while the piston 5 moves from the bottom dead point P1 to the top dead point P2. The supply of the gas fuel by the gas fuel supply unit 6 may be completed in the middle while the piston 5 moved from the bottom dead point P1 to the top dead point P2, and be ended after the supply of the scavenging gas is completed. The exhaust valve 9 may be closed after a certain time from the time at which the supply of the gas fuel is completed. The first controller 8a may advance the closing timing of the exhaust valve 9. Preferably, the exhaust valve 9 may be closed just after the supply of the gas fuel is completed. The first controller 8a advances the closing timing of the exhaust valve 9, so that the compression time in the cylinder 4 can become long as the piston 5 moves from the bottom dead point P1 to the top dead point P2.

The first controller 8a may control an effective compression ratio of the cylinder 4, when exhaust is recirculated through EGR line L3 according to the operation of the EGR system 1 when the dual fuel engine is operated in the gas mode. Preferably, the first controller 8a may maintain or increase the effective compression ratio of the cylinder 4. The first controller 8a advances the closing timing of the exhaust valve 9, so that a rate at which a mixture of the gas fuel and the scavenging gas in the cylinder 4 is discharged to the outside becomes low. In addition, the compression time in the cylinder 4 becomes long, and therefore, the effective compression ratio in the cylinder 4 may be maintained or increased as compared with the operation of the existing EGR system 2. Since the effective compression ratio in the cylinder 4 is maintained or increased, a compression pressure of the cylinder 4 may be maintained to have the same level as the case where the EGR system 1 is not operated. That is, in the case where the EGR system 1 in accordance with the embodiment 1 of the present invention is operated when the engine 3 is operated in the gas mode, a maximum compression pressure of the cylinder 4 to the same level as the case where the EGR system 1 is not operated can be ensured. Thus, a required amount of the gas fuel can be reduced, based on that the same engine power is provided in the case where the EGR system 1 is operated and the case where the EGR system 1 is not operated.

Also, the first controller 8a may control a timing at which a liquid fuel is injected into the cylinder 4, when exhaust is recirculated through EGR line L3 according to the operation of the EGR system 1 when the dual fuel engine is operated in the gas mode. When the combustion pressure is high in the cylinder 4, the injection timing of the liquid fuel may be delayed. When the combustion pressure is low, the injection timing may be advanced.

The first controller 8a may control a compression temperature in the cylinder 4, when exhaust is recirculated through EGR line L3 according to the operation of the EGR system 1 when the dual fuel engine is operated in the gas mode. Preferably, the first controller 8a may increase the temperature in the cylinder 4. As described above, the compression time in the cylinder according to the operation of the EGR system 1 becomes long as compared with the operation of the existing EGR system 2, and therefore, the effective compression ratio in the cylinder 4 may be maintained or increased. In addition, the compression temperature in the cylinder 4 may be increased due to the increase in the effective compression ratio and the increase in the temperature of the scavenging gas. The increase in compression temperature in the cylinder 4 and the decrease in air-fuel ratio according to the operation of the EGR system 1 may increase a combustion temperature in the cylinder 4, but an increment of the combustion temperature according to the operation of the EGR system 1 may be relatively lower than that of the combustion temperature according to the operation of the existing EGR system 2. That is, in the case where the EGR system 1 in accordance with the embodiment 1 of the present invention is operated when the engine 3 is operated in the gas mode, the combustion temperature increases as compared with the case where the EGR system 1 is not operated, but the increment of the combustion temperature is small, as compared with the case where the existing EGR system 2 is operated. Thus, the amount of nitrous oxide generated can be reduced as compared with the case where the existing EGR system 2 is operated.

FIG. 6 illustrates graphs respectively showing, as relative ratios (EGR on), A. whether to perform EGR, B. ratio of methane in exhaust gas, C. ratio of methane recirculated as scavenging gas, and D. effective lambda (air-fuel ratio) in the cylinder in a case where the EGR system in accordance with the embodiment 1 of the present invention is applied to the duel fuel engine, and is operated in the gas mode with respect to the case where the existing EGR system 2 is operated in the gas mode, and showing the case where the EGR system 1 is operated in the gas mode together with a case where the EGR system 1 is not operated in the gas mode (EGR off).

FIG. 6A is a graph showing whether to perform EGR. Hereinafter, system environments, etc. in the case where the EGR system 1 is operated (EGR on) and the case where the EGR system 1 is not operated (EGR off) will be compared and described. In the case where the EGR system 1 in accordance with the embodiment 1 of the present invention is operated, an exhaust gas recirculation rate increases, as compared with the case where the existing EGR system 2 is operated. The exhaust gas recirculation rate may be changed by controlling the opening of the EGR valve 10.

FIG. 6B is a graph relatively showing a ratio of methane in exhaust gas flowing through the exhaust line L1 at a front end of the turbine 12a. In the case where the EGR system 1 is operated, the ratio of the methane decreases, as compared with the case where the EGR system 1 is not operated, and remarkably decreases, as compared with the ratio of the methane in the exhaust gas generated when the existing EGR system 2 is operated in FIG. 2. This is because the first controller 8a advances the closing timing of the exhaust valve 9 in the EGR system 1 in accordance with the embodiment 1 of the present invention, so that an amount of the methane discharged decreases since a period in which the mixture of the gas fuel and the scavenging gas in the cylinder 4 can be discharged to the outside is shortened. Due to a direct decrease in methane slip amount, a ratio of methane detected in a pipe at a front end of the turbine 12a in the EGR system 1 may become low, as compared with the case where the existing EGR system 2 is operated.

FIG. 6C is a graph relatively showing a ratio of methane recirculated as the scavenging gas. As described above, in the case where the EGR system 1 is not operated, mixture of the exhaust gas and scavenging gas through the EGR line L3 is not made, and hence the methane is not detected. In the case where the EGR system 1 is operated, methane in the exhaust gas may be introduced to the compressor 11 through the EGR line 11 and then introduced to the intake line L2. However, as shown in FIG. 6B, the flow rate of the methane in the exhaust gas decreases, and therefore, the ratio of the methane recirculated as the scavenging gas, as compared with the case where the existing EGR system 2 is operated.

FIG. 6D is a graph relatively showing an effective lambda (air-fuel ratio) in the cylinder 4. In the case where the EGR system 1 is not operated, mixture of the exhaust gas and scavenging gas through the EGR line L3 is not made, and hence a relatively large amount of air (oxygen) contains in the scavenging gas supplied to the cylinder 4 through the intake line L2. Therefore, the air-fuel ratio becomes relatively high. On the other, in the case where the EGR system 1 is operated, an amount of air in the combustion chamber of the cylinder 4 decreases due to the mixture of the exhaust gas and the scavenging gas through the EGR line L3, and therefore, the air-fuel ratio also becomes relatively low.

FIG. 7 illustrates graphs respectively showing, as relative ratios (EGR on), A. maximum compression pressure of the cylinder, B. maximum compression temperature of the cylinder, C. maximum combustion pressure in the cylinder, and D. maximum combustion temperature in the cylinder in the case where the EGR system 1 in accordance with the embodiment 1 of the present invention is applied to the dual fuel engine, and is operated in the gas mode with respect to the case where the existing EGR system 2 is operated in the gas mode, and showing the case where the EGR system 1 is operated in the gas mode together with the case where the EGR system 1 is not operated in the gas mode (EGR off). Hereinafter, subsequently to the description related to FIG. 6, system environments, etc. in the case where the EGR system 1 is operated (EGR on) and the case where the EGR system 1 is not operated (EGR off) will be compared and described.

FIG. 7A is a graph relatively showing a maximum compression pressure of the cylinder 4. In the case where the EGR system 1 is operated, the maximum compression pressure is equally maintained, as compare with the case where the EGR system 1 is not operated. When exhaust is recirculated through the EGR line L3 according to the operation of the EGR system 1, the first controller 8a advances the closing timing of the exhaust valve 9, so that a rate at which a mixture of the gas fuel and the scavenging gas in the cylinder 4 is discharged to the outside becomes low. In addition, a compression time in the cylinder 4 becomes long, and therefore, an effective compression ratio in the cylinder 4 may be maintained or increased, as compared with the case where the existing EGR system 2 is operated. When the effective compression ratio in the cylinder 4 is maintained or increased, the compression pressure of the cylinder 4 may be equally maintained, as compared with the case where the EGR system 1 is not operated, and be maintained high, as compared with in the case where the existing EGR 2 is operation.

FIG. 7B is a graph relatively showing a maximum compression temperature of the cylinder 4. In the case where the EGR system 1 is operated, the maximum compression temperature of the cylinder 4 increases, as compared with the case where the EGR system 1 is not operated. The temperature of the scavenging gas introduced to the combustion chamber in the cylinder 4 increases due to the operation of the EGR system 1, and the effective compression ratio in the cylinder 4 increases as described above. Therefore, the maximum compression temperature of the cylinder 4 increases.

FIG. 7C is a graph relatively showing a maximum combustion pressure in the cylinder 4. In the case where the EGR system 1 is operated, a maximum combustion pressure in the cylinder 4 is similar to that in the case where EGR system 1 is not operated. This is a result represented since the maximum combustion pressure in the case where EGR system 1 is operation is set to a level similar to that of the maximum combustion pressure in the case where the EGR system 1 is not operated so as to compare the gas fuel supply amount which will be described later.

FIG. 7D is a graph relatively showing a maximum combustion temperature in the cylinder 4. In the case where the EGR system 1 is operation, a maximum combustion temperature in the cylinder 4 becomes higher than that in the case where the EGR system 1 is not operated. The amount of air introduced to the cylinder 4 through the intake line L2 decreases as the EGR system 1 is operated, so that the air-fuel ratio decreases. Unlike the diesel mode, when the engine 3 is operated in the gas mode, gas fuel and air exist in a state where the gas fuel and the air are mixed together in the combustion chamber of the cylinder 4, and hence the gas fuel is burned faster as the air-fuel ratio becomes lower. Therefore, the maximum combustion temperature in the cylinder 4 may further increase. Since a recirculation rate in the operation of the EGR system 1 is slightly higher than that in the operation of the existing EGR system 2, a maximum combustion temperature in the operation of the EGR system 1 may be lower than that in the operation of the existing EGR system 2.

FIG. 8 illustrates graphs respectively showing, as relative ratios (EGR on), A. gas fuel supply amount and B. nitrous oxide (NOx) generation amount in the case where the EGR system in accordance with the embodiment 1 of the present invention is applied to the dual fuel engine, and is operated in the gas mode with respect to the case where the existing EGR system 2 is operated in the gas mode, and showing the case where the EGR system 1 is operated in the gas mode together with the case where the EGR system 1 is not operated in the gas mode (EGR off). Hereinafter, subsequently to the description related to FIGS. 6 and 7, system environments, etc. in the case where the EGR system 1 is operated (EGR on) and the case where the EGR system 1 is not operated (EGR off) will be compared and described.

FIG. 8A is a graph relatively showing a supply amount of gas fuel required with respect to that the same engine power in the case where the EGR system 1 is operated and the case where the EGR system 1 is not operated. As described above in FIG. 7A, in the case where EGR system 1 is operated, the compression pressure in the cylinder 4 is maintained at the same level, as compared with the case where in the EGR system 1 is not operated, and hence the amount of gas fuel required to ensure engine power can be reduced, as compared with the case where the existing EGR system 2 is operated.

FIG. 8B is a graph relatively showing an amount of nitrous oxide in the exhaust gas. As described above in FIG. 7D, when the air-fuel ratio decreases in the case where the EGR system 1 is operated in the gas mode, the combustion of the gas fuel is further accelerated, so that the maximum combustion temperature is further increased. An oxidation reaction of nitrogen in the exhaust gas is accelerated due to the high combustion temperature, and therefore, the amount of the nitrous oxide generated increases. However, in the case of the EGR system 1 is operated, the maximum combustion temperature may be lower than that in the case where the existing EGR system 2 is operated, and hence the amount of the nitrous oxide generated may be smaller than that in the case where the existing EGR system 2 is operated.

As described above, in this embodiment, in order to effectively obtain an effect of the EGR system 1 when the dual fuel engine is operated in the gas mode, the first controller 8a for controlling the opening/closing of the exhaust valve 9 is provided in the EGR system 1, and the closing timing of the exhaust valve 9 is advanced in exhaust recirculation through EGR line L3, so that the effective compression ratio of the cylinder is maintained or increased. Thus, the consumption amount of gas fuel can be reduced with respect to engine power at the same level, as compared with the case where the existing EGR system 2 is operated. In addition, the amount of the nitrous oxide generated in the exhaust gas can be reduced.

Hereinafter, an EGR system 1 in accordance with embodiment 2 of the present invention will be described in detail with reference to FIGS. 9 to 15.

FIGS. 9 to 12 respectively illustrate EGR systems 1 in accordance with embodiments 2-1 to 2-4 of the present invention. The EGR system 1 in accordance with the embodiment 2 of the present invention provides a system which further includes a second controller 8b for controlling a flow rate of exhaust gas supplied to turbines 12a and 12b in the existing EGR system 2. The second controller 8b may be used to increase the flow rate of the exhaust gas supplied to the turbines 12a and 12b. Hereinafter, in this embodiment, portions different from those of the existing EGR system 2 will be mainly described, and portions which will not be described below are the same as those of the above-described embodiment.

Referring to FIG. 9 related to the embodiment 2-1 of the present invention, the EGR system 1 may further include a bypass line L4a which connects front and rear ends of the turbine 12a and is opened/closed, and the second controller 8b may control the bypass line L4a in exhaust recirculation through the EGR line L3. Preferably, the second controller 8b may partially close the bypass line L4a or completely close the bypass line L4a. In a case where the EGR system 1 is not operated, i.e., a case where exhaust gas flow through the EGR line L3 does not occur, the bypass line L4a may be maintained in a state in which the bypass line L4a is opened, so that exhaust gas flowing through the exhaust line L1 passes through the turbine 12a and then is discharged to the outside as it is. In a case where the EGR system 1 is operated, the bypass line La may be partially closed or be completely closed, so that the amount of the exhaust gas supplied to the turbine 12a is increased. In the case where the EGR system 1 is operated, an amount of exhaust energy supplied to the turbine 12a is maintained at the same level as the case where the EGR system 1 is not operated, so that a compression pressure of the cylinder 4 can be maintained at the same level as the case where the EGR system 1 is not operated.

Referring to FIG. 10 related to the embodiment 2-2 of the present invention, the EGR system 1 may further include a bypass line L4b which connects front and rear ends of the turbine 12a and is opened/closed, and the second controller 8b may control the bypass line L4b in exhaust recirculation through the EGR line L3. Preferably, the second controller 8b may supply a portion of the scavenging gas discharged from the compressor 11 to the turbine 12a by opening the bypass line L4b. In the case where the EGR system 1 is not operated, i.e., the case where the exhaust flow through the EGR line L3 does not occur, the bypass line L4b may be maintained in a state in which the bypass line L4b is closed, so that the scavenging gas flowing through the intake line L2 is introduced into the cylinder 4. In the case where the EGR system 1 is operated, the bypass line L4b may be opened, so that the amount of the exhaust gas supplied to the turbine 12a is increased. In the case where the EGR system 1 is operated, an amount of exhaust energy supplied to the turbine 12a is maintained at the same level as the case where the EGR system 1 is not operated, so that a compression pressure of the cylinder 4 can be maintained at the same level as the case where the EGR system 1 is not operated.

Referring to FIG. 11 related to the embodiment 2-3 of the present invention, the intake line L2 of the EGR system 1 may further provided with a cooler 13. The EGR system 1 may further include a bypass line L4c which connects a rear end of the cooler 13 and a front end of the turbine 12a and is opened/closed, and the second controller 8b may control the bypass line L4c in exhaust recirculation through the EGR line L3. Preferably, the second controller 8b may supply a portion of the scavenging gas discharged from the cooler 13 to the turbine 12a by opening the bypass line L4c. In the case where the EGR system 1 is not operated, i.e., the case where the exhaust gas flow does not occur, the bypass line L4c may be maintained in a state in which the bypass line L4c is closed, so that the scavenging gas flowing through the intake line L2 is introduced into the cylinder 4. In the case where the EGR system 1 is operated, the bypass line L4c may be opened, so that the amount of the exhaust gas supplied to the turbine 12a is increased. In the case where the EGR system 1 is operated, an amount of exhaust energy supplied to the turbine 12a is maintained at the same level as the case where the EGR system 1 is not operated, so that a compression pressure of the cylinder 4 can be maintained at the same level as the case where the EGR system 1 is not operated.

Referring to FIG. 12 related to the embodiment 2-4 of the present invention, the turbine 12b of the EGR system 1 may be a variable turbine which is provided with a nozzle vane (not shown) and controls the nozzle vane, and the second controller 8b may increase the flow rate of the exhaust gas supplied to the turbine 12b by controlling the nozzle vane in exhaust recirculation through the EGR line L3. A variable nozzle tool (not shown) may be provided on an exhaust path for supplying the exhaust gas to a turbine wheel (not shown) of the variable turbine 12b, and the nozzle vane may be provided on the variable nozzle tool. The variable nozzle tool controls the nozzle vane, thereby changing an exhaust flow area (throttle area) of the exhaust path. The second controller 8b may control the opening/closing of the nozzle vane by controlling the variable nozzle tool. When the nozzle vane is partially closed or completely closed, the flow rate of the exhaust gas introduced to the turbine wheel, and therefore, the revolution speed of the turbo charger is increased. Due to the increase in the revolution speed of the turbo charger, the mixture amount of the exhaust gas and air introduced from the outside in the compressor 11, and the supply amount of the scavenging gas through the intake line L2 is increased. Thus, in the case where the EGR system 1 is operated, the compression pressure of the cylinder 4 can be maintained at the same level as the case where the EGR system 1 is not operated.

Synthetically, in the case where the EGR system 1 in accordance with the embodiment 2 of the present invention is applied and operated when the engine 3 is operated in the gas mode, the maximum compression pressure of the cylinder 4 can be ensured at the same level as the case where the EGR system 1 is not operated. Accordingly, the amount of gas fuel required to ensure engine power can be reduced, as compared with the case where the existing EGR system 2 is operated.

FIG. 13 illustrates graphs respectively showing, as relative ratios (EGR on), A. whether to perform EGR, B. ratio of methane in exhaust gas, C. ratio of methane recirculated as scavenging gas, and D. effective lambda (air-fuel ratio) in the cylinder in a case where the EGR system 1 in accordance with the embodiment 2 of the present invention is applied to the dual fuel engine, and is operated in the gas mode with respect to the case where the existing EGR system 2 is operated in the gas mode, and showing the case where the EGR system 1 is operated in the gas mode together with a case where the EGR system 1 is not operated in the gas mode (EGR off).

FIG. 13A is a graph showing whether to perform EGR. Hereinafter, system environments, etc. in the case where the EGR system 1 is operated (EGR on) and the case where the EGR system 1 is not operated (EGR off) will be compared and described. In the case where the EGR system 1 in accordance with the embodiment 2 of the present invention is operated, an exhaust gas recirculation rate increases, as compared with the case where the existing EGR system 2 is operated. The exhaust gas recirculation rate may be changed by controlling the opening of the EGR valve 10.

FIG. 13B is a graph relatively showing a ratio of methane in exhaust gas flowing through the exhaust line L1 at a front end of the turbine 12a or 12b. In the case where the EGR system 1 is operated, the ratio of the methane is maintained at the same level as the case where the EGR system 1 is not operated, and remarkably decreased as compared with the ratio of the methane in the exhaust gas generated in the case where the existing EGR system 2 is operated in FIG. 2B. This is because the second controller 8b increases the flow rate of the exhaust gas supplied to the turbine 12a or 12b in the EGR system 1 in accordance with the embodiment 2 of the present invention, so that the amount of methane discharged from the cylinder 4 decreases since the amount of the gas fuel supplied decreases. Due to a decrease in methane slip amount, a ratio of methane detected in a pipe at a front end of the turbine 12a or 12b in the EGR system 1 may become low, as compared with the case where the existing EGR system 2 is operated.

FIG. 13C is a graph relatively showing a ratio of methane recirculated as the scavenging gas. As described above, in the case where the EGR system 1 is not operated, mixture of the exhaust gas and scavenging gas through the EGR line L3 is not made, and hence the methane is not detected. In the case where the EGR system 1 is operated, methane in the exhaust gas may be introduced to the compressor 11 through the EGR line 11 and then introduced to the intake line L2. However, as shown in FIG. 13B, the flow rate of the methane in the exhaust gas decreases, and hence the ratio of the methane recirculated as the scavenging gas.

FIG. 13D is a graph relatively showing an effective lambda (air-fuel ratio) in the cylinder 4. In the case where the EGR system 1 is not operated, mixture of the exhaust gas and scavenging gas through the EGR line L3 is not made, and hence a relatively large amount of air (oxygen) contains in the scavenging gas supplied to the cylinder 4 through the intake line L2. Therefore, the air-fuel ratio becomes relatively high. On the other, in the case where the EGR system 1 is operated, the exhaust gas is introduced through the EGR line L3, and hence the air-fuel ratio becomes low, as compared with the case where the EGR system 1 is not operated. However, the inflow rate of air is increased, and therefore, the air-fuel ratio becomes high, as compared with the case where the existing EGR system 2 is operated.

FIG. 14 illustrates graphs respectively showing, as relative ratios (EGR on), A. maximum compression pressure of the cylinder, B. maximum compression temperature of the cylinder, C. maximum combustion pressure in the cylinder, and D. maximum combustion temperature in the cylinder in the case where the EGR system 1 in accordance with the embodiment 2 of the present invention is applied to the dual fuel engine, and is operated in the gas mode with respect to the case where the existing EGR system 2 is operated in the gas mode, and showing the case where the EGR system 1 is operated in the gas mode together with the case where the EGR system 1 is not operated in the gas mode (EGR off). Hereinafter, subsequently to the description related to FIG. 13, system environments, etc. in the case where the EGR system 1 is operated (EGR on) and the case where the EGR system 1 is not operated (EGR off) will be compared and described.

FIG. 14A is a graph relatively showing a maximum compression pressure of the cylinder 4. In the case where the EGR system 1 is operated, the maximum compression pressure is equally maintained, as compare with the case where the EGR system 1 is not operated. When exhaust is recirculated through the EGR line L3 according to the operation of the EGR system 1, the second controller 8b increases the flow rate of the exhaust gas supplied to the turbine 12a or 12b, so that exhaust energy supplied to the turbine 12a or 12 can be maintained high, as compared with the case where the existing EGR system 2 is operated. Accordingly, in the case where the EGR system 1 is operated, the compression pressure of the cylinder 4 can be maintained at the same level as the case where the EGR system 1 is not operated. In the case where the EGR system 1 is operated, the compression pressure of the cylinder 4 can be maintained high, as compared with the case where the existing EGR system 2 is operated.

FIG. 14B is a graph relatively showing a maximum compression temperature of the cylinder 4. In the case where the EGR system 1 is operated, the maximum compression temperature of the cylinder 4 becomes minutely low, as compared with the case where the EGR system 1 is not operated. When the temperature of the scavenging gas introduced to the combustion chamber in the cylinder 4 is increased due to the operation of the EGR system 1, the specific heat ratio of gas in the combustion chamber decreases, and therefore, the maximum compression temperature of the cylinder 4 decreases.

FIG. 14C is a graph relatively showing a maximum combustion pressure in the cylinder 4. In the case where the EGR system 1 is operated, a maximum combustion pressure in the cylinder 4 is similar to that in the case where EGR system 1 is not operated. This is a result represented since the maximum combustion pressure in the case where EGR system 1 is operation is set to a level similar to that of the maximum combustion pressure in the case where the EGR system 1 is not operated so as to compare the gas fuel supply amount which will be described later.

FIG. 14D is a graph relatively showing a maximum combustion temperature in the cylinder 4. In the case where the EGR system 1 is operation, a maximum combustion temperature in the cylinder 4 is minutely low, as compared with the case where the EGR system 1 is not operated. The amount of air introduced to the cylinder 4 through the intake line L2 decreases as the EGR system 1 is operated, so that the air-fuel ratio slightly decreases. However, the thermal capacity (specific heat) of the scavenging gas including the exhaust gas recirculated and supplied in the cylinder 4 increases as the carbon dioxide content increases. Since the carbon dioxide content increases, the maximum combustion temperature may become low, as compared with the case where the EGR system 1 is not operated. In the case where the EGR system 1 is operated, the air-fuel ratio increases as compared with the case where the existing EGR system 2 is operated, and therefore, the maximum combustion temperature may become low, as compared with the case where the existing EGR system 2 is operated.

FIG. 15 illustrates graphs respectively showing, as relative ratios (EGR on), A. gas fuel supply amount and B. nitrous oxide (NOx) generation amount in the case where the EGR system 1 in accordance with the embodiment 2 of the present invention is operated in the gas mode with respect to the case where the existing EGR system 2 is operated in the gas mode, and showing the case where the EGR system 1 is operated in the gas mode together with the case where the EGR system 1 is not operated in the gas mode (EGR off). Hereinafter, subsequently to the description related to FIGS. 13 and 14, system environments, etc. in the case where the EGR system 1 is operated (EGR on) and the case where the EGR system 1 is not operated (EGR off) will be compared and described.

FIG. 15A is a graph relatively showing a supply amount of gas fuel required with respect to that the same engine power in the case where the EGR system 1 is operated and the case where the EGR system 1 is not operated. As described above in FIG. 14A, in the case where EGR system 1 in accordance with the embodiment 2 of the present invention is operated, the compression pressure in the cylinder 4 is maintained at the same level, as compared with the case where in the EGR system 1 is not operated, and thus the supply amount of gas fuel required to ensure engine power can be decreased, as compared with the case where the existing EGR system 2 is operated.

FIG. 15B is a graph relatively showing an amount of nitrous oxide in the exhaust gas. As described above in FIG. 14D, in the EGR system 1 is operated in the gas mode, the maximum combustion temperature may become low, as compared with in the case where the EGR system 1 is not operated, as the specific heat of the scavenging gas in the cylinder 4 increases. In addition, in the case where the EGR system 1 is operated, the air-fuel ratio increases as compared with the case where the existing EGR system 2 is operated, and hence the maximum combustion temperature may become low, as compared with the case where the existing EGR system 2 is operated. Therefore, the amount of nitrous oxide generated may further decrease.

As described above, in this embodiment, in order to effectively obtain an effect of the EGR system 1 when the dual fuel engine is operated in the gas mode, the second controller 8b for controlling the flow rate of the exhaust gas supplied to the turbine 12a or 12b is provided in the EGR system 1, and the flow rate of the exhaust gas supplied to the turbine 12a and 12b is increased in exhaust recirculation through EGR line L3. Thus, with respect to engine power at the same level, the consumption amount of gas fuel can be reduced without changing the effective compression ratio, as compared with the case where the existing EGR system 2 is operated. In addition, the amount of the nitrous oxide generated can be reduced.

FIG. 16 illustrates graphs respectively showing, as relative ratios, A. EGR rate, B. methane slip ratio, C. gas fuel consumption rate, and D. nitrous oxide (NOx) generation rate in a case where the EGR system is not applied when the dual fuel engine is operated in the gas mode (non-application of EGR), in a case where the existing EGR system 2 is applied and operated (application of EGR), in a case where the EGR system 1 in accordance with the embodiment 2 of the present invention is applied and operated (EGR+engine tuning), and in a case where the EGR system 1 in accordance with the embodiment 2 of the present invention is applied and operated (EGR+additional device).

FIG. 16A is a graph showing whether to perform EGR. In the case where the EGR system 1 in accordance with the embodiments 1 and 2 of the present invention is applied and operated, an exhaust gas recirculation rate is higher than that in the case where the existing EGR system 2 is operated. The exhaust gas recirculation rate may be changed by controlling the opening of the EGR valve 10.

FIG. 16B is a graph relatively showing a ratio of methane in exhaust gas flowing through the exhaust line L1 at a front end of the turbine 12a or 12b. As described above, in the case where the EGR system 1 in accordance with the embodiment 1 of the present invention is applied and operated, the closing timing of the exhaust valve is advanced, so that a direct methane slip amount from the cylinder 4 can be remarkably decreased. In the case where the EGR system 1 in accordance with the embodiment 2 of the present invention is applied and operated, the methane ratio is maintained at the same level as the case where the EGR system 1 is not operated.

FIG. 16C is a graph relatively showing a supply amount of gas fuel required with respect to the same engine power in the case where the EGR systems 1 and 2 are operated and in the case where the EGR systems 1 and 2 are not operated. As described above, in the case where the EGR system 1 in accordance with the embodiments 1 and 2 of the present invention is operated, the maximum compression pressure in the cylinder 4 can be maintained at the same level as the case where the EGR system 1 is not operated. Thus, in the case where the EGR system 1 in accordance with the embodiments 1 and 2 of the present invention is operated, the supply amount of gas fuel required to ensure engine power can be decreased, as compared with the case where the existing EGR system 2 is operated.

FIG. 16D is a graph relatively showing an amount of nitrous oxide in the exhaust gas. As described above, in the case where the EGR system 1 in accordance with the embodiment 1 of the present invention is operated, an amount of the nitrous oxide generated may be greater than that in the case where the EGR system 1 is not operated due to an increase in maximum combustion temperature. However, in the case of both the embodiments 1 and 2, a maximum combustion temperature may be lower than that according to the operation of the existing EGR system 2, and hence the amount of the nitrous oxide generated may be smaller than that according to the operation of the existing EGR system 2.

Synthetically, in the case where the EGR system 1 in accordance with the embodiments 1 and 2 is applied and operated when the dual fuel engine is operated in the gas mode, the supply amount of gas fuel required with respect to that the same engine power, as compared with the case where the EGR system 1 is not operated or the case where the existing EGR system 2 is operated.

Also, in the case where the EGR system 1 in accordance with the embodiments 1 and 2 is applied and operated when the dual fuel engine is operated in the gas mode, the amount of nitrous oxide generated can be decreased as compared with the case where the existing EGR system 2 is operated. This implies that, when a decrement of the amount of the nitrous oxide generated is decreased by increasing the combustion temperature in the EGR system 1, the consumption amount of gas fuel and the methane slip amount can be additionally decreased.

Thus, the EGR system 1 in accordance with the embodiments of the present invention can effectively ensure the effect according to the application of the EGR system while minimizing the limitation of engine power when the dual fuel engine is operated in the gas mode.

Meanwhile, although not shown in the drawings, the EGR system 1 in accordance with the embodiments of the present invention may simultaneously include both the first controller 8a shown in FIG. 5 and the second controller 8b shown in FIGS. 9 to 13. Also, in the EGR system 1 in accordance with the embodiments of the present invention, the variable turbine 12b shown in FIG. 13 may be included in the embodiments shown in FIGS. 5 and 9 to 13. Also, in the EGR system 1 in accordance with the embodiments of the present invention, the cooler 13 shown in FIG. 11 may be included in the embodiments shown in FIGS. 5, 9, 10, and 12.

The present invention is not limited to the embodiments described above, and it will be apparent that a combination of the embodiments or a combination of at least one of the embodiments and prior art may be included as still another embodiment.

Although the present invention has been described in connection with the embodiments, the embodiments of the present invention are only for illustrative purposes and should not be construed as limiting the scope of the present invention. It will be understood by those skilled in the art that various changes and modifications can be made thereto within the technical spirit and scope defined by the appended claims. Therefore, it should be understood that the technical contents related to the modification and application that can be easily derived from the embodiments of the present invention are included in the present invention.

## Claims

1. An exhaust gas recirculation (EGR) system comprising:
a cylinder in which fuel is burned;
an exhaust valve provided at an upper side of the cylinder;
a piston reciprocating between a bottom dead point and a top dead point in the cylinder;
a gas fuel supply unit supplying gas fuel to the cylinder in the middle while the piston moves from the bottom dead point to the top dead point;
an intake line through which scavenging gas introduced to the cylinder passes;
an exhaust line through which exhaust gas discharged from the cylinder passes;
a turbo charger including a compressor and a turbine, wherein the compressor is connected to the intake line to compress the scavenging gas and then supply the compressed scavenging gas to the cylinder, and wherein the turbine is connected to the exhaust line to be driven by being supplied with the exhaust gas from the cylinder, and transfers rotary power to the compressor;
an EGR line connecting a front end portion of the turbine on the exhaust line to a front end portion of the compressor on the intake line; and
a first controller controlling opening/closing of the exhaust valve,
wherein the first controller controls a closing timing of the exhaust valve in exhaust recirculation through the EGR line.

2. The EGR system of claim 1, wherein the first controller advances the closing timing of the exhaust valve in the exhaust recirculation through the EGR line.

3. The EGR system of claim 1, wherein the first controller controls an effective compression ratio of the cylinder in the exhaust recirculation through the EGR line.

4. The EGR system of claim 3, wherein the first controller maintains or increases the effective compression ratio of the cylinder in the exhaust recirculation through the EGR line.

5. The EGR system of claim 1, wherein the first controller controls a compression temperature in the cylinder in the exhaust recirculation through the EGR line.

6. The EGR system of claim 5, wherein the first controller increases the compression temperature in the cylinder in the exhaust recirculation through the EGR line.

7. The EGR system of claim 1, wherein the first controller controls an injection timing of liquid fuel.

8. An exhaust gas recirculation (EGR) system comprising:
a cylinder in which fuel is burned;
an exhaust valve provided at an upper side of the cylinder;
a piston reciprocating between a bottom dead point and a top dead point in the cylinder;
a gas fuel supply unit supplying gas fuel to the cylinder in the middle while the piston moves from the bottom dead point to the top dead point;
an intake line through which scavenging gas introduced to the cylinder passes;
an exhaust line through which exhaust gas discharged from the cylinder passes;
a turbo charger including a compressor and a turbine, wherein the compressor is connected to the intake line to compress the scavenging gas and then supply the compressed scavenging gas to the cylinder, and wherein the turbine is connected to the exhaust line to be driven by being supplied with the exhaust gas from the cylinder, and transfers rotary power to the compressor;
an EGR line connecting a front end portion of the turbine on the exhaust line to a front end portion of the compressor on the intake line; and
a second controller controlling a flow rate of the exhaust gas supplied to the turbine,
wherein the second controller controls the flow rate of the exhaust gas supplied to the turbine in exhaust recirculation through the EGR line.

9. The EGR system of claim 8, wherein the second controller increases the flow rate of the exhaust gas supplied to the turbine in the exhaust recirculation through the EGR line.

10. The EGR system of claim 8, further comprising a bypass line connecting a front end and a rear end of the turbine, the bypass line being opened/closed,
wherein the second controller controls the bypass line in the exhaust recirculation through the EGR line.

11. The EGR system of claim 8, further comprising a bypass line connecting a rear end of the compressor and a front end of the turbine, the bypass line being opened/closed,
wherein the second controller controls the bypass line in the exhaust recirculation through the EGR line, thereby supplying a portion of the scavenging gas discharged from the compressor to the turbine.

12. The EGR system of claim 8, wherein the intake line further includes a cooler,
wherein the EGR system further comprises a bypass line connecting a rear end of the cooler and a front end of the turbine, the bypass line being opened/closed, and
wherein the second controller controls the bypass line in the exhaust recirculation through the EGR line, thereby supplying a portion of the scavenging gas discharged from the cooler to the turbine.

13. The EGR system of claim 8, wherein the turbine is a variable turbine controlling a nozzle vane provided therein, and
wherein the second controller increases a flow rate of the exhaust gas supplied to the turbine by controlling the nozzle vane in the exhaust recirculation through the EGR line.

14. The EGR system of claim 1, wherein the cylinder is operated in one of a gas mode in which driving power is generated by using gas fuel as a main fuel and a diesel mode in which driving power is generated by using diesel as a main fuel.

15. The EGR system of claim 1, wherein the exhaust gas discharged from the cylinder is introduced in a high pressure state to the compressor through the EGR line, and
wherein an EGR blower pressurizing the exhaust gas is omitted in the EGR line.
